(19) **Europäisches Patentamt / European Patent Office / Office européen des brevets**

(11) **EP 4 748 954 A1**

(12) **EUROPEAN PATENT APPLICATION**
published in accordance with Art. 153(4) EPC

(43) Date of publication:
27.05.2026 Bulletin 2026/22

(21) Application number: 24895927.2

(22) Date of filing: 19.09.2024

(51) International Patent Classification (IPC):
$C22C\ 21/04$ (2006.01)    $C22C\ 21/02$ (2006.01)
$C22C\ 21/00$ (2006.01)    $C22C\ 1/03$ (2006.01)
$H01M\ 50/224$ (2021.01)    $B21C\ 37/00$ (2006.01)

(52) Cooperative Patent Classification (CPC):
B21C 37/00; C22C 1/03; C22C 21/00; C22C 21/02;
C22C 21/04; C22F 1/043; H01M 8/2475;
H01M 50/224; H01M 50/233; H01M 50/244

(86) International application number:
PCT/CN2024/119791

(87) International publication number:
WO 2025/112829 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.11.2023 CN 202311598941

(71) Applicants:
• Shanghai Jiao Tong University
Shanghai 200240 (CN)
• Contemporary Amperex Technology Co., Limited
Ningde, Fujian 352100 (CN)

(72) Inventors:
• DU, Shangzhe
Shanghai 200240 (CN)
• JIA, Jun
Shanghai 200240 (CN)
• FENG, Kai
Shanghai 200240 (CN)
• WANG, Qing
Shanghai 200240 (CN)
• LIN, Zhiquan
Shanghai 200240 (CN)

(74) Representative: Ziebig Hengelhaupt Intellectual
Property Attorneys
Patentanwaltskanzlei PartGmbB
Leipziger Straße 49
10117 Berlin (DE)

(54) **ALUMINUM ALLOY MATERIAL, ALUMINUM ALLOY STRUCTURAL PART, BATTERY CASE, BATTERY SYSTEM, ELECTRIC DEVICE, PREPARATION METHOD AND USE**

(57) An aluminum alloy material, an aluminum alloy structural component, a battery box, a battery system, an electric apparatus (6), a preparation method, and an application are provided. The aluminum alloy material includes the following constituent elements: Si, Mn, Mo, Zr, Sr, Sc, B, a matrix element Al, and an unavoidable impurity element. In the aluminum alloy material, both Mo element and Zr element have a low content.

EP 4 748 954 A1

**100 μm**

| Element type | Element content at position P1 (wt%) | Element content at position (wt%) | Element content at position P3 ( wt%) | Element content at position P4 ( wt%) |
|---|---|---|---|---|
| Al | 92.55 | 67.03 | 67.89 | 91.42 |
| Si | 4.71 | 1.37 | 3.7 | 6.25 |
| Mn | 1.38 | 0.1 | 0.27 | 1.16 |
| Fe | 0.55 | - | - | 0.48 |
| Sc | 0.81 | - | - | 0.69 |
| B | - | 31.51 | 28.14 | - |

FIG. 3

## Description

### RELATED APPLICATIONS

This application claims priority to Chinese Patent Application No. CN2023115989415, filed on November 27, 2023 and entitled "ALUMINUM ALLOY MATERIAL, ALUMINUM ALLOY STRUCTURAL COMPONENT, BATTERY BOX, BATTERY SYSTEM, ELECTRIC APPARATUS, PREPARATION METHOD, AND APPLICATION", which is incorporated herein by reference in its entirety.

### TECHNICAL FIELD

This application relates to the technical field of aluminum alloy materials, further relates to the field of battery technology, and more specifically relates to an aluminum alloy material, an aluminum alloy structural component, a battery box, a battery system, an electric apparatus, a preparation method, and an application.

### BACKGROUND

The statements herein merely provide background information related to this application and do not necessarily constitute the prior art.

A battery box is a critical constituent component of a battery, playing an important role in protecting the battery. The battery box not only needs to have good mechanical properties to reduce the degree of damage to the battery upon impact but also requires a certain level of corrosion resistance to extend the service life of the battery. Currently, aluminum alloy is a primary material for forming battery boxes. It is necessary to develop an aluminum alloy material that possesses both good mechanical properties and excellent corrosion resistance.

### SUMMARY

According to various implementations and embodiments of this application, this application provides an aluminum alloy material, an aluminum alloy structural component, a battery box, a battery system, an electric apparatus, a preparation method, and an application. The aluminum alloy material has good mechanical properties and excellent corrosion resistance, and can be used as a primary material for aluminum alloy structures in a battery box, effectively extending the service life of the battery box.

According to a first aspect, this application provides an aluminum alloy material including the following constituent elements: Si, Mn, Mo, Zr, Sr, Sc, B, a matrix element Al, and an unavoidable impurity element; where a mass percentage of Mo element in the aluminum alloy material is less than or equal to 0.25%; and a mass percentage of Zr element in the aluminum alloy material is less than or equal to 0.2%.

In some embodiments, an aluminum alloy material is provided, including the following constituent elements: Si, Mn, Mo, Zr, Sr, Sc, B, a matrix element Al, and an unavoidable impurity element;

where the aluminum alloy material includes an Al-Si eutectic phase, an $AlB_x$ strengthening phase, and an AlSiMnSc strengthening phase, and the $AlB_x$ strengthening phase includes at least an $AlB_2$ strengthening phase;
a mass percentage of Mo element in the aluminum alloy material is less than or equal to 0.25%; and
a mass percentage of Zr element in the aluminum alloy material is less than or equal to 0.2%.

The aluminum alloy material uses Al as the matrix element and includes Si (silicon) element, Mn (manganese) element, Mo (molybdenum) element, Zr (zirconium) element, Sr (strontium), Sc (scandium) element, and B (boron) element. The matrix element Al in the aluminum alloy material forms an $\alpha$-Al matrix phase, and the matrix phase mainly includes primary $\alpha$-Al crystals. By adding Si, Sc, B, and Mn elements, an Al-Si eutectic phase, an $AlB_x$ strengthening phase, and an AlSiMnSc strengthening phase can be formed, providing the aluminum alloy material with good mechanical properties, such as mechanical strength and intensity. Si element can form an Al-Si eutectic phase with the $\alpha$-Al matrix phase, providing a strengthening effect, and allowing the aluminum alloy material to have a microstructure mainly including primary $\alpha$-Al crystals and an Al-Si eutectic structure. The introduction of the rare earth element Sc can improve both the mechanical strength and corrosion resistance of the aluminum alloy material. Sc can exist in a form of a solid solution and an alloy phase to provide a significant strengthening effect through limited solid solution, increased deformation resistance, and promotion of dislocation proliferation. Alloy phases formed by Sc element typically include, for example, an AlSiMnSc strengthening phase. Additionally, a portion of Sc element is soluble in a matrix, increasing a self-corrosion potential, while another portion of Sc element can reduce a matrix-alloy phase potential difference, reducing the tendency for potential corrosion. B element can change the crystallization conditions of aluminum alloy, increasing the growth rate of crystal nuclei, thereby refining grains. Due to low solubility in aluminum alloys, B element is likely to form an $AlB_x$ strengthening phase distributed close to the eutectic structure. Mn element can form an AlSiMnSc strengthening phase, facilitate mold release during a smelting process, and promote uniform distribution of precipitated phases. The introduction of Sr element can modify the Al-Si eutectic structure, improving mechanical properties such as mechanical strength and ductility. Furthermore, Sr element also helps to improve the ductile workability of the aluminum alloy, improves the mechanical properties of the aluminum alloy, and reduces the homogenization time of ingots. In some known aluminum alloy materials, the mechanical properties and corrosion resistance of the aluminum alloy materials can be improved by adding Mo element and Zr element, but this usually requires addition of a large amount of the elements. Mo element can be dissolved in aluminum crystals as a solid solution, and helps to promote formation of a compact passivation film on the aluminum alloy, thereby improving the corrosion resistance. Zr element can hinder or suppress a recrystallization process, thereby refining a cast structure. The aluminum alloy material provided by the first aspect of this application, through the aforementioned element design and alloy phase control, can effectively achieve good mechanical properties and excellent corrosion resistance by adding only small amounts of Mo element and Zr element. By synergistically designing the element composition and element content in the aluminum alloy material, the resulting aluminum alloy material can have a specific microstructure, and the elements can achieve good mechanical properties and excellent corrosion resistance through multiple synergistic effects.

In some embodiments, an aluminum alloy material is provided, including, by mass percentage, 8%-11.5% of Si element, 0.05%-0.35% of Sc element, 0.01%-0.4% of B element, 0.3%-1.0% of Mn element, 0.02%-0.25% of Mo element, 0.01%-0.2% of Zr element, 0.02%-0.08% of Sr element, a matrix element Al, and an unavoidable impurity element.

In some embodiments, the aluminum alloy material includes an Al-Si eutectic phase, an $AlB_x$ strengthening phase, and an AlSiMnSc strengthening phase.

By properly designing the element composition and element content in the aluminum alloy and utilizing the multiple synergistic effects of the elements, the prepared aluminum alloy material can have a specific microstructure and thus has both good mechanical properties and excellent corrosion resistance. With the above element composition, the aluminum alloy material can form an $\alpha$-Al matrix phase, an Al-Si eutectic phase, an $AlB_x$ strengthening phase, and an AlSiMnSc strengthening phase, providing the aluminum alloy material with good mechanical properties, such as mechanical strength and intensity. Si element can form an Al-Si eutectic phase with the $\alpha$-Al matrix phase, providing a strengthening effect. The introduction of the rare earth element Sc can improve both the mechanical strength and corrosion resistance of the aluminum alloy material. Sc can exist in a form of a solid solution and an alloy phase to provide a significant strengthening effect through limited solid solution, increased deformation resistance, and promotion of dislocation proliferation. Alloy phases formed by Sc element typically include, for example, an AlSiMnSc strengthening phase. Additionally, a portion of Sc element is soluble in a matrix, increasing a self-corrosion potential, while another portion of Sc element can reduce a matrix-alloy phase potential difference, reducing the tendency for potential corrosion. B element can change the crystallization conditions of aluminum alloy, increasing the growth rate of crystal nuclei, thereby refining grains. Due to low solubility in aluminum alloys, B element is likely to form an $AlB_x$ strengthening phase distributed close to the eutectic structure. Mn element can form an AlSiMnSc strengthening phase, facilitate mold release during a smelting process, and promote uniform distribution of precipitated phases. The introduction of Sr element can modify the Al-Si eutectic structure, improving mechanical properties such as mechanical strength and ductility. Furthermore, Sr element also helps to improve the ductile workability of the aluminum alloy, improves the mechanical properties of the aluminum alloy, and reduces the homogenization time of ingots. Mo element can be dissolved in aluminum crystals as a solid solution, and helps to promote formation of a compact passivation film on the aluminum alloy, thereby improving the corrosion resistance. Zr element can hinder or suppress a recrystallization process, thereby refining a cast structure. Through the aforementioned overall design of element type and content, good mechanical properties and excellent corrosion resistance can be effectively achieved by adding only small amounts of Mo element and Zr element.

Based on any suitable embodiment of this application, further, in some embodiments, the aluminum alloy material satisfies one or more of the following characteristics:

a mass fraction of the $AlB_x$ strengthening phase in the aluminum alloy material is less than or equal to 0.1%, optionally 0.05%-0.1%; and

a mass fraction of the AlSiMnSc strengthening phase in the aluminum alloy material is less than or equal to 0.2%, optionally 0.07%-0.2%.

By adjusting the content of one or both of the $AlB_x$ strengthening phase and the AlSiMnSc strengthening phase, the mechanical strength of the aluminum alloy material can be adjusted. Additionally, controlling the content of the $AlB_x$ strengthening phase also helps to reduce the adverse impact of this alloy phase on corrosion resistance. Adjusting the contents of the $AlB_x$ strengthening phase and the AlSiMnSc strengthening phase in the aluminum alloy material within the aforementioned ranges is more conducive to achieving both good mechanical properties and excellent corrosion resistance.

Based on any suitable embodiment of this application, further, in some embodiments, the aluminum alloy material satisfies one or more of the following characteristics:

a mass percentage of Si element in the aluminum alloy material is 8%-11.5%, optionally 8.5%-11.5%, further optionally 8.5%-11%;

a mass percentage of Sc element in the aluminum alloy material is 0.05%-0.35%, optionally 0.1%-0.35%, further optionally 0.1%-0.3%;

a mass percentage of B element in the aluminum alloy material is 0.01%-0.4%, optionally 0.01%-0.25%, further optionally 0.01%-0.1%; and

a mass percentage of Mn element in the aluminum alloy material is 0.3%-1.0%, optionally 0.45%-0.95%, further optionally 0.45%-0.70%.

By adjusting the contents of Si, Sc, B, and Mn elements in the aluminum alloy material within the aforementioned ranges, the contents of the Al-Si eutectic phase, the $AlB_x$ strengthening phase, and the AlSiMnSc strengthening phase can be controlled, which is more conducive to ensuring both the mechanical properties and the corrosion resistance, achieving both good mechanical properties and excellent corrosion resistance.

The formation of the Al-Si eutectic phase can be achieved by controlling the Si content below a eutectic point of Si element (approximately 11.7%), which helps to suppress the formation of primary silicon that is detrimental to corrosion resistance.

Controlling the Sc content within the aforementioned ranges is conducive to improving the mechanical properties and corrosion resistance while controlling the cost.

Controlling the B content within the aforementioned ranges realizes effective utilization of refined grains and the function of the $AlB_x$ strengthening phase while better suppressing the adverse impact of the $AlB_x$ alloy phase on corrosion resistance.

The addition of Mn element provides a strengthening effect, which mainly enhances the strength of the matrix Al by a solid solution in the matrix Al through lattice distortion. By adjusting the Mn content, the contents of the AlSiMnSc strengthening phase and the $MnAl_6$ alloy phase can be adjusted, a mold release process can also be adjusted, and uniform distribution of precipitated phases is promoted. Controlling the Mn content within the aforementioned ranges is more conducive to improving the mechanical properties of the aluminum alloy material.

Based on any suitable embodiment of this application, further, in some embodiments, the aluminum alloy material includes an $MnAl_6$ alloy phase; and optionally, a mass fraction of the $MnAl_6$ alloy phase in the aluminum alloy material is 0.55%-1.25%, further optionally 0.45%-1.3%.

The $MnAl_6$ alloy phase can provide a supplementary strengthening effect. Adjusting the content of the $MnAl_6$ alloy phase within the aforementioned ranges is conductive to better exerting the supplementary strengthening effect, and the content of the $MnAl_6$ alloy phase can be adjusted by adjusting the Mn content. Within a certain content range of Mn element, the content of the $MnAl_6$ alloy phase in the aluminum alloy material can be increased by increasing the Mn content.

Based on any suitable embodiment of this application, further, in some embodiments, the aluminum alloy material satisfies one or more of the following characteristics: a mass percentage of Mo element in the aluminum alloy material is 0.02%-0.25%, optionally 0.04%-0.2%, further optionally 0.05%-0.1%; and

a mass percentage of Zr element in the aluminum alloy material is 0.01%-0.2%, optionally 0.01%-0.15%, further optionally 0.05%-0.15%.

Mo element can be dissolved in aluminum crystals as a solid solution, and helps to promote formation of a compact passivation film on the aluminum alloy, thereby improving the corrosion resistance. Zr element can hinder or suppress a recrystallization process, thereby refining a cast structure. By controlling the contents of the two elements within the aforementioned ranges, based on the aforementioned element composition and alloy phase design, the aluminum alloy material can achieve both good mechanical properties and excellent corrosion resistance.

Based on any suitable embodiment of this application, further, in some embodiments, a mass percentage of Sr element in the aluminum alloy material is 0.02%-0.08%, optionally 0.02%-0.06%, further optionally 0.02%-0.05%.

By adjusting the Sr content, a modification effect of Sr element on the Al-Si eutectic structure can be adjusted. Controlling the Sr content within a more suitable range is more conducive to optimizing the mechanical properties of the aluminum alloy material.

Based on any suitable embodiment of this application, further, in some embodiments, the aluminum alloy material includes, by mass percentage, 8.5%-11.5% of Si element, 0.1%-0.35% of Sc element, 0.01%-0.25% of B element, 0.45%-0.95% of Mn element, 0.05%-0.2% of Mo element, 0.01%-0.15% of Zr element, 0.02%-0.06% of Sr element, a matrix element Al, and an unavoidable impurity element.

Based on any suitable embodiment of this application, further, in some embodiments, the aluminum alloy material includes, by mass percentage, 8.5%-11% of Si element, 0.1%-0.3% of Sc element, 0.01%-0.1% of B element, 0.45%-0.70% of Mn element, 0.05%-0.1% of Mo element, 0.05%-0.15% of Zr element, 0.02%-0.05% of Sr element, a matrix element Al, and an unavoidable impurity element.

Based on any suitable embodiment of this application, further, in some embodiments, the aluminum alloy material includes, by mass percentage, 8%-11.5% of Si element, 0.05%-0.35% of Sc element, 0.01%-0.4% of B element, 0.3%-1.0% of Mn element, 0.05%-0.25% of Mo element, 0.01%-0.2% of Zr element, 0.02%-0.08% of Sr element, the unavoidable impurity element, and the balance of Al element.

Based on any suitable embodiment of this application, further, in some embodiments, the aluminum alloy material includes, by mass percentage, 8%-11.5% of Si element, 0.05%-0.35% of Sc element, 0.05%-0.4% of B element, 0.3%-1.0% of Mn element, 0.05%-0.25% of Mo element, 0.01%-0.2% of Zr element, 0.02%-0.08% of Sr element, the unavoidable impurity element, and the balance of Al element.

By adjusting the types and contents of the elements in the aluminum alloy material, the aluminum alloy material can achieve good mechanical properties and excellent corrosion resistance across various content ranges.

Based on any suitable embodiment of this application, further, in some embodiments, the unavoidable impurity element includes Fe element.

Based on any suitable embodiment of this application, further, in some embodiments, the aluminum alloy material satisfies one or more of the following characteristics:

a mass percentage of Fe element in the aluminum alloy material is less than or equal to 0.7%, and optionally, a mass percentage of the unavoidable impurity element in the aluminum alloy material is less than 0.7%;

the aluminum alloy material includes an AlSiMnFe phase; and optionally, a mass fraction of the AlSiMnFe phase in the aluminum alloy material is less than or equal to 0.2%, further optionally less than or equal to 0.1%; and

the aluminum alloy material includes an AlSiMnFe/Sc alloy phase; and optionally, a mass fraction of the AlSiMnFe/Sc alloy phase in the aluminum alloy material is less than or equal to 0.2%, optionally 0.07%-0.2%.

During the casting of aluminum alloy, Fe impurities often unavoidably exist in the formed aluminum alloy. A small amount of Fe element (for example, the Fe content is less than or equal to 0.7wt) facilitates mold release during casting, but a large Fe content is likely to reduce the corrosion resistance of the aluminum alloy material. Fe impurities can form needle-like AlSiMnFe phases, and the AlSiMnFe phases have a certain strengthening effect. However, due to a large contact area and a significant potential difference between an AlSiMnFe phase and an $\alpha$-Al matrix, localized galvanic corrosion may occur. Controlling the Fe content within a lower range helps to reduce an adverse impact of Fe on the corrosion resistance.

Additionally, the introduction of Sc element can convert some needle-like AlSiMnFe phases into fine and dendritic AlSiMnFe/Sc alloy phases, reducing a detrimental effect of the needle-like AlSiMnFe phases on the corrosion resistance.

Based on any suitable embodiment of this application, further, in some embodiments, the aluminum alloy material satisfies one or more of the following characteristics:

a mass percentage of Mg element in the aluminum alloy material is less than or equal to 0.1%, optionally less than or equal to 0.01%, further optionally 0%;

a mass percentage of Zn element in the aluminum alloy material is less than or equal to 0.1%, optionally less than or equal to 0.01%, further optionally 0%; and

a mass percentage of Cu element in the aluminum alloy material is less than or equal to 0.01%, optionally 0%.

In some known aluminum alloy materials, one or more of Mg, Zn, and Cu elements are often added to provide a strengthening effect. The aluminum alloy material provided by the first aspect can effectively achieve good mechanical properties and excellent corrosion resistance while limiting the contents of Mg, Zn, and Cu at low levels.

According to a second aspect of this application, an aluminum alloy structural component is provided, which is a formed body made from the aluminum alloy material according to the first aspect.

According to a third aspect of this application, a preparation method of an aluminum alloy structural component is provided, including the following steps:

heating and melting an aluminum ingot, adding ingredients determined according to a nominal composition of the aluminum alloy material according to the first aspect in the form of intermediate alloys, performing melting and slag removal to prepare a refined aluminum alloy melt;

performing cast molding on the refined aluminum alloy melt to prepare an aluminum alloy ingot; and

performing heat treatment and cooling on the aluminum alloy ingot to obtain the aluminum alloy structural component.

The aluminum alloy structural component, as a formed body of the aluminum alloy material according to the first aspect, can have good mechanical properties and excellent corrosion resistance, and can be used as an aluminum alloy structural component in a battery box, effectively extending the service life of the battery box. The aluminum alloy structural component can be prepared by using an aluminum ingot to provide a matrix element, supplemented by corresponding alloy elements through melting, slag removal, cast molding, heat treatment, and cooling. The shape and size of the aluminum alloy structural component can be controlled by selecting a mold of a corresponding shape and size during the cast molding step. It can be understood that the shape and size of the cooled structural component can also be adjusted to obtain an aluminum alloy structural component of a target shape and size, for example, using methods including but not limited to sandblasting and polishing.

According to a fourth aspect of this application, a battery box is provided, where the battery box satisfies at least one of the following characteristics:

at least a portion of a structural component in the battery box includes the aluminum alloy material according to the first aspect;

the battery box includes the aluminum alloy structural component according to the second aspect; and

the battery box includes an aluminum alloy structural component prepared by the preparation method of an aluminum alloy structural component according to the third aspect.

The battery box can provide protection for an internal battery cell. On one hand, the battery box needs to have good mechanical strength to reduce the degree of damage to the battery upon impact. On the other hand, the battery box is susceptible to damage caused by galvanic corrosion during storage and battery cycling. Therefore, the battery box needs to have a certain level of corrosion resistance. A battery box made of the aforementioned aluminum alloy material or aluminum alloy structural component can meet both the requirements for mechanical properties and corrosion resistance of the battery box.

According to a fifth aspect of this application, a battery system is provided, including the battery box according to the fourth aspect and a battery cell located inside the battery box.

Based on any suitable embodiment of this application, further, in some embodiments, the battery cell includes a liquid electrolyte.

According to a sixth aspect of this application, an electric apparatus is provided, including at least one of the aluminum alloy material according to the first aspect, the aluminum alloy structural component according to the second aspect, an aluminum alloy structural component prepared by the preparation method of an aluminum alloy structural component according to the third aspect, the battery box according to the fourth aspect, and the battery system according to the fifth aspect.

Using the aforementioned aluminum alloy material, the aforementioned aluminum alloy structural component, or a battery box including the aforementioned aluminum alloy material or aluminum alloy structural component in one or more of the battery system and the electric apparatus helps to improve the reliability and service life of the battery system and electric apparatus, not only reducing the degree of damage to the battery upon impact but also improving the corrosion resistance of the battery box, including but not limited to improving the resistance to galvanic corrosion.

When the battery cell in the battery system includes a liquid electrolyte, higher requirements are imposed on the corrosion resistance of the battery box, and the aforementioned battery system and electric apparatus are more likely to meet storage and usage requirements.

According to a seventh aspect of this application, an application of the aluminum alloy material according to the first aspect in preparation of at least one of an aluminum alloy structural component, a battery box, a battery system, and an electric apparatus is provided.

The details of one or more implementations and embodiments of this application are set forth in the accompanying drawings and description below. Other features, objectives, and advantages of this application will become apparent from the description, accompanying drawings, and claims.

## BRIEF DESCRIPTION OF DRAWINGS

To better describe and illustrate the implementations, embodiments, or examples provided by this application, reference may be made to one or more accompanying drawings. The additional details or examples used to describe the accompanying drawings should not be considered as limiting the scope of any of the disclosed applications, the currently described implementations, embodiments, or examples, or the best mode of these applications as currently understood. Moreover, identical reference numerals denote identical components throughout all the accompanying drawings. It should also be noted that the accompanying drawings are drawn in a simplified form, solely for the convenience and clarity of assisting in the explanation of this application. The various dimensions of each component shown in the accompanying drawings are arbitrarily depicted, may be accurate, or may not be drawn to actual scale. For example, to make the illustration clearer, some dimensions of components in the accompanying drawings are appropriately enlarged. Unless otherwise specified, the components in the accompanying drawings are not drawn to scale. This application does not limit the dimensions of each component.

In the accompanying drawings:

FIG. 1 is a microstructure diagram of an aluminum alloy material according to an embodiment of this application.

FIG. 2 is a microstructure and element distribution diagram of an aluminum alloy material according to an embodiment of this application.

FIG. 3 is a field emission scanning electron microscope (FESEM) + EDS (with energy dispersive spectroscopy) point scan diagram of an aluminum alloy material according to an embodiment of this application, along with analysis results of four point scan locations.

FIG. 4 is a curve showing changes of mass fraction, elastic modulus, thermal conductivity, and density of an AlSi9MnMoZr reference alloy material and an aluminum alloy material according to an embodiment of this application with temperature (temperature), where the mass fraction refers to a mass fraction of the aluminum alloy material at different temperatures relative to an initial mass of the aluminum alloy material in an unheated state, reflecting a thermal weight loss of the aluminum alloy material.

FIG. 5 is a potentiodynamic polarization curve of an aluminum alloy material according to an embodiment of this application, with a horizontal axis representing a chemical potential (measured in V) and a vertical axis representing a current density (A/cm$^2$).

FIG. 6 is a result of an alternating-current impedance test of an aluminum alloy material according to an embodiment of this application.

FIG. 7 is a macroscopic surface morphology diagram of an aluminum alloy material at different corrosion times in a salt spray corrosion test according to an embodiment of this application.

FIG. 8 is a schematic diagram of sample dimensions for a tensile test of an aluminum alloy material according to an embodiment of this application.

FIG. 9 is a schematic diagram of a battery module according to an embodiment of this application.

FIG. 10 is a schematic diagram of a battery pack according to an embodiment of this application.

FIG. 11 is an exploded view of the battery pack according to the embodiment of this application shown in FIG. 10.

FIG. 12 is a schematic diagram of an electric apparatus according to an embodiment of this application.

Description of reference signs: 1. battery pack; 2. upper box body; 3. lower box body; 4. battery module; 5. battery cell; and 6. electric apparatus.

## DESCRIPTION OF EMBODIMENTS

The following describes in detail some implementations and embodiments of an aluminum alloy material, an aluminum alloy structural component, a battery box, a battery system, an electric apparatus, a preparation method, and an application of this application with appropriate reference to the accompanying drawings. However, non-essential detailed descriptions may be omitted. For example, detailed descriptions of well-known matters or repetitive descriptions of substantially identical structures may be omitted. This is to avoid unnecessary verbosity of the following description, facilitating understanding by those skilled in the art. Additionally, the accompanying drawings and the following description are provided for those skilled in the art to fully understand this application and are not intended to limit the subject matter described in the claims.

The "range" disclosed in this application may be defined in the form of a lower limit and an upper limit, where a given range is defined by selecting a lower limit and an upper limit, and the selected lower and upper limits define the boundaries of a particular range. Ranges defined in this manner may include or exclude the endpoints, and any endpoint can be independently included or excluded, and can be arbitrarily combined, to be specific, any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any combination of real numbers between a and b, where both a and b are real numbers. For example, the numerical range "0-5" means that all real numbers between "0-5" have been listed herein, and "0-5" is merely an abbreviated representation of combinations of these numerical values. Additionally, when a parameter is described as an integer greater than or equal to 2, it is equivalent to disclosing that the parameter is, for example, an integer of 2, 3, 4, 5, 6, 7, 8, 9, 10, 11, 12, or the like. For example, when a parameter is described as an integer selected from "2-10", it is equivalent to listing the integers 2, 3, 4, 5, 6, 7, 8, 9, and 10.

In this application, terms such as "multiple", "various", "various items of", "several", and the like, unless otherwise specified, refer to a quantity greater than or equal to 2. For example, "one or more" means one or more than one. It can be understood that when referring to "any number" of items, it means a combination of any suitable number of items, to be specific, "any number" of items are combined in a manner of avoiding conflict with each other and enabling the implementation of this application.

Unless otherwise specified, all embodiments and optional embodiments of this application can be combined with each other to form new technical solutions.

References to "embodiment" herein mean that a particular feature, structure, or characteristic described in connection with the embodiment may be included in at least one embodiment or implementation of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments. References to "implementation" herein have a similar understanding.

Those skilled in the art can understand that in the methods of various implementations or embodiments, the order of writing each step does not imply a strict execution order that imposes any limitation on the implementation process. The specific execution order of each step should be determined by its function and possible inherent logic. Unless otherwise specified, all steps in this application can be performed sequentially or randomly, preferably sequentially. For example, method M includes steps (a) and (b), indicating that method M may include steps (a) and (b) performed sequentially, or steps (b) and (a) performed sequentially. For another example, method M may also include step (c), indicating that step (c) can be added to method M in any order, for example, method M may include steps (a), (b), and (c), or steps (a), (c), and (b), or steps (c), (a), and (b), and the like.

In this application, unless otherwise specified, open-ended technical features or technical solutions described with words such as "contain", "comprise", "include", and the like do not exclude additional members beyond those listed, and can be regarded as providing both closed features or solutions including the listed members as well as providing open-ended features or solutions that include additional members beyond the listed members. For example, A includes a1, a2, and a3, unless otherwise specified, may also include other members or may not include additional members, and can be regarded as providing a feature or solution of "A includes a1, a2, and a3" or "A is selected from a1, a2, and a3" as well as providing a feature or solution of "A includes not only a1, a2, and a3 but also other members".

In this application, unless otherwise specified, when "A (for example, B)" is mentioned, it indicates that B is a non-limiting example of A, and it can be understood that A is not limited to B.

In this application, unless otherwise specified, "optionally", "optional", and "option" means something is not essential, that is, being selected from either of two parallel solutions of "present" or "absent". If "optional" appears in multiple places in a technical solution, unless otherwise specified and without contradiction or mutual constraint, each "optional" is independent. Unless otherwise specified, descriptions such as "optionally include", "optionally comprise", and the like in this application, taking "optionally include" as an example, mean "may include or may not include".

In this application, unless otherwise specified, features or solutions corresponding to "and/or" include any single item among two or more related listed items, as well as any and all combinations of the related listed items, where "any and all combinations" include a combination of any two related listed items, a combination of any more related listed items, or a combination of all related listed items. For example, "A and/or B" refers to a group including A, B, and a group formed by "the combination of A and B". "Comprising A and/or B" may mean "comprising A, comprising B, and comprising A and B", or "comprising A, comprising B, or comprising A and B". This can be appropriately understood based on the context of the statement.

The terms "combination thereof", "any combination thereof", "any combination manner thereof", and the like used herein include all suitable combinations of any two or more of the listed items.

Herein, the term "suitable" in "suitable combination manner", "suitable manner", "any suitable manner", and the like needs to satisfy a condition that the technical solutions of this application can be implemented.

Herein, the terms "preferred", "better", "preferable", "preferably", "relatively better", "relatively preferred", and the like are used only to describe embodiments or examples with better effects, and it should be understood that they do not limit the protection scope of this application. If "preferred" appears in multiple places in a technical solution, unless otherwise specified and without contradiction or mutual constraint, each "preferred" is independent.

In this application, terms such as "further", "more further", "particularly", "for example", "such as", "as an example", "in an example", and the like are used for descriptive purposes, which indicate differences in content but should not be understood as limiting the protection scope of this application.

In this application, in the descriptions "first aspect", "second aspect", "third aspect", "fourth aspect", and the like, the terms "first", "second", "third", "fourth", and the like are solely for descriptive purposes and should not be understood as indicating or implying relative importance or quantity, nor as implying the importance or quantity of the indicated technical features. Moreover, "first", "second", "third", "fourth", and the like serve only as non-exhaustive enumeration purposes, and it should be understood that they do not constitute a closed limitation on quantity.

In this application, the term "room temperature" generally refers to 4°C-35°C, and may refer to 20°C±5°C. In some embodiments of this application, room temperature refers to 20°C-30°C.

In this application, for units involving data ranges, if a unit is specified only after a right endpoint, it indicates that the units of the left and right endpoints are the same. For example, 3 to 5 h and 3-5 h both indicate that the units of the left endpoint "3" and the right endpoint "5" are h (hours), which both have the same meaning as 3h to 5h. In addition, similar descriptions involving other parameters such as temperature and size are also understood in the same manner.

The weights of related components mentioned in the implementations or embodiments of this application may not only refer to the content of each component but also represent a proportional relationship between the weights of the components. Therefore, as long as the contents of related components in the implementations or embodiments of this application is proportionally scaled up or down, they all fall within the scope described in this application. Further, the weights involved in the implementations or embodiments of this application may be in mass units such as μg, mg, g, and kg well known in the field of chemical engineering. Unless otherwise specified, a mass ratio is numerically equal to a corresponding weight ratio. For example, if a mass of a substance A is m1 and its weight is W1, and a mass of a substance B is m2 and its weight is W2, a mass ratio m1/m2 is numerically equal to a corresponding weight ratio W1/W2.

In this application, unless otherwise specified, wt% represents a weight percentage based on weight, which is numerically equal to a corresponding mass percentage based on mass. In this application, wt% may also be denoted as wt.%.

In this application, unless otherwise specified, the unit (%) of percentage involved in "mass percentage" and "mass fraction" may also be denoted as wt% or %(w/w).

In this application, unless otherwise specified, "greater than and equal to" and "greater than or equal to" can both be denoted as "≥", "less than and equal to" and "less than or equal to" can both be denoted as "≤", "greater than" can be equivalently denoted as ">", and "less than" can be equivalently denoted as "<". In this application, unless otherwise specified, "greater than or equal to" and "≥" can be regarded as also providing the two solutions of "greater than" and "equal to". In this application, unless otherwise specified, "less than or equal to" and "≤" can be regarded as also providing the two solutions of "less than" and "equal to".

In this application, exemplary descriptions such as "in some implementations (or embodiments)" or "in one implementation (or embodiment)" may include, but are not limited to, the meaning that these solutions can be combined with other solutions in a suitable manner to form new technical solutions.

For a battery box that provides protection outside a battery cell, the battery box is required to not only have good mechanical properties to reduce the degree of damage to the battery upon impact but also have a certain level of corrosion resistance to extend the service life of the battery. Currently, materials for forming battery boxes mainly include aluminum alloy. In some common aluminum alloys, relatively high contents of Mo element and Zr element are used to improve material properties, but this comes with higher costs and limitations in raw material availability. It is necessary to develop aluminum alloy materials with different element compositions to achieve both good mechanical properties and excellent corrosion resistance.

According to various implementations and various embodiments of this application, this application provides an aluminum alloy material, an aluminum alloy structural component, a battery box, a battery system, an electric apparatus, a preparation method, and an application. The aluminum alloy material has good mechanical properties and excellent corrosion resistance, can be used as a primary material for aluminum alloy structures in a battery box, and can effectively extend the service life of the battery box.

According to a first aspect, this application provides an aluminum alloy material including Si, Mn, Mo, Zr, Sr, Sc, B, a matrix element Al, and an unavoidable impurity element, where Mo element and Zr element both have a low content in the aluminum alloy material (for example, the Mo content is less than or equal to 0.25wt%, and the Zr content is less than or equal to 0.2wt%). The aluminum alloy material has good mechanical properties and excellent corrosion resistance, can be used as a primary material for a battery box, and can effectively extend the service life of the battery box.

In this application, unless otherwise specified, "the aluminum alloy material is used as a primary material for a battery box" means that the aluminum alloy material is used as a primary material for at least some structures in the battery box, where a mass proportion of the aluminum alloy material in these structures is greater than 80%, is further greater than 90%, and is even close to 100% or is 100%. In this application, unless otherwise specified, when "the aluminum alloy material is used as a primary material for a structural component or product", it is permissible to add another functional component to the aluminum alloy material to further improve the material properties without compromising basic properties of the aluminum alloy material, particularly without compromising the mechanical properties and corrosion resistance. In some embodiments, the aluminum alloy material is used as a constituent material of the battery box. In this case, the chemical composition of some structures or structural components of the battery box is consistent with that of the aluminum alloy material, and a mass proportion of the aluminum alloy material in the corresponding structures or structural components is 100%.

In this application, unless otherwise specified, "content of an element" refers to a mass percentage of that element in the aluminum alloy material provided by this application. For example, "Mo content" refers to a mass percentage of Mo element in the aluminum alloy material, and "Zr content" refers to a mass percentage of Zr element in the aluminum alloy material. Unless otherwise specified, "content of an alloy phase" refers to a mass percentage of that alloy phase in the aluminum alloy material provided by this application.

In some embodiments, an aluminum alloy material is provided, including the following constituent elements: Si, Mn, Mo, Zr, Sr, Sc, B, a matrix element Al, and an unavoidable impurity element;

where the aluminum alloy material includes an Al-Si eutectic phase, an $AlB_x$ strengthening phase, and an AlSiMnSc strengthening phase, and the $AlB_x$ strengthening phase includes at least an $AlB_2$ strengthening phase;
a mass percentage of Mo element in the aluminum alloy material is less than or equal to 0.25%; and
a mass percentage of Zr element in the aluminum alloy material is less than or equal to 0.2%.

The aluminum alloy material uses Al as the matrix element and includes Si (silicon) element, Mn (manganese) element, Mo (molybdenum) element, Zr (zirconium) element, Sr (strontium), Sc (scandium) element, and B (boron) element. The matrix element Al in the aluminum alloy material forms an $\alpha$-Al matrix phase, and the matrix phase mainly includes primary $\alpha$-Al crystals. By adding Si, Sc, B, and Mn elements, an Al-Si eutectic phase, an $AlB_x$ strengthening phase, and an AlSiMnSc strengthening phase can be formed, providing the aluminum alloy material with good mechanical properties, such as mechanical strength and intensity. Si element can form an Al-Si eutectic phase with the $\alpha$-Al matrix phase, providing a strengthening effect, and allowing the aluminum alloy material to have a microstructure mainly including primary $\alpha$-Al crystals and an Al-Si eutectic structure. The introduction of the rare earth element Sc can improve both the mechanical strength and corrosion resistance of the aluminum alloy material. Sc can exist in a form of a solid solution and an alloy phase to provide a significant strengthening effect through limited solid solution, increased deformation resistance, and promotion of dislocation proliferation. Alloy phases formed by Sc element typically include, for example, an AlSiMnSc strengthening phase. Additionally, a portion of Sc element is soluble in a matrix, increasing a self-corrosion potential, while another portion of Sc element can reduce a matrix-alloy phase potential difference, reducing the tendency for potential corrosion. B element can change the crystallization conditions of aluminum alloy, increasing the growth rate of crystal nuclei, thereby refining grains. Due to low solubility in aluminum alloys, B element is likely to form an $AlB_x$ strengthening phase distributed close to the eutectic structure. Mn element can form an AlSiMnSc strengthening phase, facilitate mold release during a smelting process, and promote uniform distribution of precipitated phases. The introduction of Sr element can modify the Al-Si eutectic structure, improving mechanical properties such as mechanical strength and ductility. Furthermore, Sr element also helps to improve the ductile workability of the aluminum alloy, improves the mechanical properties of the aluminum alloy, and reduces the homogenization time of ingots. In some known aluminum alloy materials, the mechanical properties and corrosion resistance of the aluminum alloy materials can be improved by adding Mo element and Zr element, but this usually requires addition of a large amount of the elements. Mo element can be dissolved in aluminum crystals as a solid solution, and helps to promote formation of a compact passivation film on the aluminum alloy, thereby improving the corrosion resistance. Zr element can hinder or suppress a recrystallization process, thereby refining a cast structure. The aluminum alloy material provided by the first aspect of this application, through the aforementioned element design and alloy phase control, can effectively achieve good mechanical properties and excellent corrosion resistance by adding only small amounts of Mo element and Zr element. By synergistically designing the element composition and element content in the aluminum alloy material, the prepared aluminum alloy material can have a specific microstructure, and the elements achieve good mechanical properties and excellent corrosion resistance through multiple synergistic effects.

In some embodiments, an aluminum alloy material is provided, including, by mass percentage, 8%-11.5% of Si element, 0.05%-0.35% of Sc element, 0.01%-0.4% of B element, 0.3%-1.0% of Mn element, 0.02%-0.25% of Mo element, 0.01%-0.2% of Zr element, 0.02%-0.08% of Sr element, a matrix element Al, and an unavoidable impurity element.

In some embodiments, the aluminum alloy material includes an Al-Si eutectic phase, an $AlB_x$ strengthening phase, and an AlSiMnSc strengthening phase.

By properly designing the element composition and element content in the aluminum alloy and utilizing the multiple synergistic effects of the elements, the prepared aluminum alloy material can have a specific microstructure and thus has both good mechanical properties and excellent corrosion resistance. With the above element composition, the aluminum alloy material can form an $\alpha$-Al matrix phase, an Al-Si eutectic phase, an $AlB_x$ strengthening phase, and an AlSiMnSc strengthening phase, providing the aluminum alloy material with good mechanical properties, such as mechanical strength and intensity. Si element can form an Al-Si eutectic phase with the $\alpha$-Al matrix phase, providing a strengthening effect. The introduction of the rare earth element Sc can improve both the mechanical strength and corrosion resistance of the aluminum alloy material. Sc can exist in a form of a solid solution and an alloy phase to provide a significant strengthening effect through limited solid solution, increased deformation resistance, and promotion of dislocation proliferation. Alloy phases formed by Sc element typically include, for example, an AlSiMnSc strengthening phase. Additionally, a portion of Sc element is soluble in a matrix, increasing a self-corrosion potential, while another portion of Sc element can reduce a matrix-alloy phase potential difference, reducing the tendency for potential corrosion. B element can change the crystallization conditions of aluminum alloy, increasing the growth rate of crystal nuclei, thereby refining grains. Due to low solubility in aluminum alloys, B element is likely to form an $AlB_x$ strengthening phase distributed close to the eutectic structure. Mn element can form an AlSiMnSc strengthening phase, facilitate mold release during a smelting process, and promote uniform distribution of precipitated phases. The introduction of Sr element can modify the Al-Si eutectic structure, improving mechanical properties such as mechanical strength and ductility. Furthermore, Sr element also helps to improve the ductile workability of the aluminum alloy, improves the mechanical properties of the aluminum alloy, and reduces the homogenization time of ingots. Mo element can be dissolved in aluminum crystals as a solid solution, and helps to promote formation of a compact passivation film on the aluminum alloy, thereby improving the corrosion resistance. Zr element can hinder or suppress a recrystallization process, thereby refining a cast structure. Through the aforementioned overall design of element type and content, good mechanical properties and excellent corrosion resistance can be effectively achieved by adding only small amounts of Mo element and Zr element.

In this application, unless otherwise specified, "matrix element" refers to an element that provides a matrix phase. During alloy casting, an ingot of the matrix element is often used as an initial material, which is added with a modifying element to form an alloy phase including multiple elements. In this application, the matrix element of the aluminum alloy material is Al element.

In this application, unless otherwise specified, "unavoidable impurities" refer to impurity elements that are not intentionally introduced but are inevitably introduced during a preparation process.

In this application, the element composition, alloy phase, and alloy structure of the aluminum alloy material can be characterized and analyzed using, but not limited to, the following methods: X-ray diffraction (XRD) method, energy dispersive spectroscopy (EDS, Energy Dispersive Spectrometer), metallographic microscopy, and scanning electron microscopy (SEM). Operation methods and data analysis methods of these instruments are well known to those skilled in the art. Unless otherwise specified, testing and analysis methods described in the following embodiments may be used, but are not limited thereto.

In some embodiments, a mass fraction of the $AlB_x$ strengthening phase in the aluminum alloy material may be less than or equal to 0.1% (corresponding to ≤0.1%), optionally 0.05%-0.1%. The mass fraction of the $AlB_x$ strengthening phase in the aluminum alloy material may alternatively be any of the following percentages or selected from a range defined by any two of the following percentages: 0.05%, 0.06%, 0.07%, 0.08%, 0.09%, 0.1%, and the like.

In some embodiments, a mass fraction of the AlSiMnSc strengthening phase in the aluminum alloy material may be less than or equal to 0.2%, optionally 0.07%-0.2%. The mass fraction of the AlSiMnSc strengthening phase in the aluminum alloy material may alternatively be any of the following percentages or selected from a range defined by any two of the following percentages: 0.07%, 0.08%, 0.09%, 0.1%, 0.12%, 0.14%, 0.15%, 0.16%, 0.18%, 0.2%, and the like.

Based on any suitable embodiment of this application, further, in some embodiments, the aluminum alloy material satisfies one or more of the following characteristics (any numerical parameter in the following characteristics may alternatively be selected from any suitable value or range in the context):

the mass fraction of the $AlB_x$ strengthening phase in the aluminum alloy material is less than or equal to 0.1%, optionally 0.05%-0.1%; and

the mass fraction of the AlSiMnSc strengthening phase in the aluminum alloy material is less than or equal to 0.2%, optionally 0.07%-0.2%.

By adjusting the content of one or both of the $AlB_x$ strengthening phase and the AlSiMnSc strengthening phase, the mechanical strength of the aluminum alloy material can be adjusted. Additionally, controlling the content of the $AlB_x$ strengthening phase also helps to reduce an adverse impact of this alloy phase on corrosion resistance. Adjusting the contents of the $AlB_x$ strengthening phase and the AlSiMnSc strengthening phase in the aluminum alloy material within the aforementioned ranges is more conducive to achieving both good mechanical properties and excellent corrosion resistance.

Based on any suitable embodiment of this application, further, in some embodiments, a mass percentage of Si (silicon) element in the aluminum alloy material may be 8%-11.5%, optionally 8.5%-11.5%, further optionally 8.5%-11%. The mass percentage of Si element in the aluminum alloy material may alternatively be any of the following percentages or selected from a range defined by any two of the following percentages: 8%, 8.5%, 9%, 9.5%, 10%, 10.5%, 11%, 11.5%, and the like. The mass percentage of Si element in the aluminum alloy material may alternatively be selected from any suitable one of the following ranges: 8%-11%, 8%-10.5%, 8.5%-10.5%, 9%-11%, 9%-10.5%, 9%-10%, and the like.

Based on any suitable embodiment of this application, further, in some embodiments, a mass percentage of Sc (scandium) element in the aluminum alloy material may be 0.05%-0.35%, optionally 0.1%-0.35%, further optionally 0.1%-0.3%. The mass percentage of Sc element in the aluminum alloy material may alternatively be any of the following percentages or selected from a range defined by any two of the following percentages: 0.05%, 0.1%, 0.15%, 0.2%, 0.25%, 0.3%, 0.35%, and the like. The mass percentage of Sc element in the aluminum alloy material may alternatively be selected from any suitable one of the following ranges: 0.15%-35%, 0.15%-3%, 0.1%-0.25%, 0.15%-0.25%, and the like.

Based on any suitable embodiment of this application, further, in some embodiments, a mass percentage of B (boron) element in the aluminum alloy material may be 0.01%-0.4%, optionally 0.01%-0.25%, further optionally 0.01%-0.1%. The mass percentage of B element in the aluminum alloy material may alternatively be any of the following percentages or selected from a range defined by any two of the following percentages: 0.01%, 0.015%, 0.02%, 0.025%, 0.03%, 0.035%, 0.04%, 0.05%, 0.06%, 0.08%, 0.1%, 0.15%, 0.2%, 0.25%, 0.3%, 0.35%, 0.4%, and the like. The mass percentage of B element in the aluminum alloy material may alternatively be selected from any suitable one of the following ranges: 0.01%-0.06%, 0.01%-0.05%, 0.01%-0.025%, 0.02%-0.25%, 0.02%-0.2%, 0.02%-0.1%, 0.02%-0.08%, 0.02%-0.06%, 0.02%-0.05%, 0.02%-0.025%, 0.05%-0.25%, 0.05%-0.4%, 0.05%-0.1%, and the like.

Based on any suitable embodiment of this application, further, in some embodiments, a mass percentage of Mn (manganese) element in the aluminum alloy material may be 0.3%-1.0%, optionally 0.45%-0.95%, further optionally 0.45%-0.70%. The mass percentage of Mn element in the aluminum alloy material may alternatively be any of the following percentages or selected from a range defined by any two of the following percentages: 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1.0%, and the like.

Based on any suitable embodiment of this application, further, in some embodiments, the aluminum alloy material satisfies one or more of the following characteristics (any numerical parameter in the following characteristics may alternatively be selected from any suitable value or range in the context):

the mass percentage of Si element in the aluminum alloy material is 8%-11.5%, optionally 8.5%-11.5%, further optionally 8.5%-11% (may alternatively be selected from any suitable content or range in the context);
the mass percentage of Sc element in the aluminum alloy material is 0.05%-0.35%, optionally 0.1%-0.35%, further optionally 0.1%-0.3% (may alternatively be selected from any suitable content or range in the context);
the mass percentage of B element in the aluminum alloy material is 0.01%-0.4%, optionally 0.01%-0.25%, further optionally 0.01%-0.1% (may alternatively be selected from any suitable content or range in the context);
the mass percentage of Mn element in the aluminum alloy material is 0.3%-1.0%, optionally 0.45%-0.95%, further optionally 0.45%-0.70% (may alternatively be selected from any suitable content or range in the context).

In this application, a content of X element may be denoted as "X content".

By adjusting the contents of Si element, Sc element, B element, and Mn element within the aforementioned ranges, the contents of the Al-Si eutectic phase, the $AlB_x$ strengthening phase, and the AlSiMnSc strengthening phase can be adjusted, which is more conducive to ensuring both the mechanical properties and corrosion resistance, and achieving both good mechanical properties and excellent corrosion resistance.

The formation of the Al-Si eutectic phase can be achieved by controlling the Si content below a eutectic point of Si element (approximately 11.7%), which helps to suppress the formation of primary silicon that is detrimental to corrosion resistance.

Controlling the Sc content within the aforementioned ranges is conducive to improving the mechanical properties and corrosion resistance while controlling the cost.

Controlling the B content within the aforementioned ranges realizes effective utilization of refined grains and the function of the $AlB_x$ strengthening phase while better suppressing the adverse impact of the $AlB_x$ alloy phase on corrosion resistance.

The addition of Mn element provides a strengthening effect, which mainly enhances the strength of the matrix Al by a solid solution in the matrix Al through lattice distortion. By adjusting the Mn content, the contents of the AlSiMnSc strengthening phase and the $MnAl_6$ alloy phase can be adjusted, a mold release process can also be adjusted, and uniform distribution of precipitated phases is promoted. Controlling the Mn content within the aforementioned ranges is more conducive to improving the mechanical properties of the aluminum alloy material.

Based on any suitable embodiment of this application, further, in some embodiments, the aluminum alloy material includes an $MnAl_6$ alloy phase; and optionally, a mass fraction of the $MnAl_6$ alloy phase in the aluminum alloy material is 0.55%-1.25%, further optionally 0.45%-1.3%. The mass fraction of the $MnAl_6$ alloy phase in the aluminum alloy material may alternatively be any of the following percentages or selected from a range defined by any two of the following percentages: 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, and the like.

The $MnAl_6$ alloy phase can provide a supplementary strengthening effect. Adjusting the content of the $MnAl_6$ alloy phase within the aforementioned ranges helps to better exert the supplementary strengthening effect, and the content of the $MnAl_6$ alloy phase can be adjusted by adjusting the Mn content. Within a certain content range of Mn element, the content of the $MnAl_6$ alloy phase in the aluminum alloy material can be increased by increasing the Mn content.

Based on any suitable embodiment of this application, in some embodiments, a mass percentage of Mo (molybdenum) element in the aluminum alloy material may be 0.02%-0.25%, optionally 0.04%-0.2%, further optionally 0.05%-0.1%. The mass percentage of Mo element in the aluminum alloy material may alternatively be any of the following percentages or selected from a range defined by any two of the following percentages: 0.02%, 0.04%, 0.05%, 0.06%, 0.08%, 0.1%, 0.12%, 0.15%, 0.16%, 0.18%, 0.2%, 0.24%, 0.25%, and the like. The mass percentage of Mo element in the aluminum alloy material may alternatively be selected from any suitable one of the following ranges: 0.02%-0.2%, 0.02%-0.15%, 0.02%-0.1%, 0.02%-0.08%, 0.04%-0.2%, 0.04%-0.15%, 0.04%-0.1%, 0.04%-0.08%, 0.05%-0.25%, 0.05%-0.2%, 0.05%-0.15%, 0.05%-0.1%, 0.05%-0.08%, and the like.

Based on any suitable embodiment of this application, in some embodiments, a mass percentage of Zr (zirconium) element in the aluminum alloy material may be 0.01%-0.2%, optionally 0.01%-0.15%, further optionally 0.05%-0.15%. The mass percentage of Zr element in the aluminum alloy material may alternatively be any of the following percentages or selected from a range defined by any two of the following percentages: 0.01%, 0.02%, 0.04%, 0.05%, 0.06%, 0.08%, 0.1%, 0.12%, 0.15%, 0.16%, 0.18%, 0.2%, and the like. The mass percentage of Zr element in the aluminum alloy material may alternatively be selected from any suitable one of the following ranges: 0.01%-0.1%, 0.01%-0.08%, 0.02%-0.2%, 0.02%-0.15%, 0.02%-0.1%, 0.02%-0.08%, 0.04%-0.2%, 0.04%-0.15%, 0.04%-0.1%, 0.04%-0.08%, 0.05%-0.2%, 0.05%-0.15%, 0.05%-0.1%, 0.05%-0.08%, and the like.

Based on any suitable embodiment of this application, further, in some embodiments, the aluminum alloy material satisfies one or more of the following characteristics (any numerical parameter in the following characteristics may alternatively be selected from any suitable value or range in the context):

the mass percentage of Mo element in the aluminum alloy material is 0.02%-0.25%, optionally 0.04%-0.2%, further optionally 0.05%-0.1% (may alternatively be selected from any suitable content or range in the context); and
the mass percentage of Zr element in the aluminum alloy material is 0.01%-0.2%, optionally 0.01%-0.15%, further optionally 0.05%-0.15% (may alternatively be selected from any suitable content or range in the context).

Mo element can be dissolved in aluminum crystals as a solid solution, and helps to promote the formation of a compact passivation film, thereby improving the corrosion resistance. Zr element can hinder or suppress a recrystallization process, thereby refining a cast structure. By controlling the contents of the two elements within the aforementioned ranges, based on the aforementioned element composition and alloy phase design, the aluminum alloy material can achieve both good mechanical properties and excellent corrosion resistance.

Based on any suitable embodiment of this application, further, in some embodiments, a mass percentage of Sr (strontium) element in the aluminum alloy material may be 0.02%-0.08% (that is, 200-800 ppm), optionally 0.02%-0.06%, further optionally 0.02%-0.05%. The mass proportion of Sr element in the aluminum alloy material may alternatively be any of the following values or selected from a range defined by any two of the following values: 200 ppm, 250 ppm, 300 ppm, 350 ppm, 400 ppm, 450 ppm, 500 ppm, 550 ppm, 600 ppm, 650 ppm, 700 ppm, 750 ppm, 800 ppm, and the like. The mass proportion of Sr element in the aluminum alloy material may alternatively be selected from any suitable one of the following ranges: 200 ppm-500 ppm, 300 ppm-500 ppm, and the like.

In this application, 1 ppm represents one part per million, that is, 1 ppm = 0.0001%. For example, 200 ppm = 0.02%, and 800 ppm = 0.08%.

By adjusting the Sr content, a modification effect of Sr element on the Al-Si eutectic structure can be adjusted. Controlling the Sr content within a more suitable range is more conducive to optimizing the mechanical properties of the aluminum alloy material.

Based on any suitable embodiment of this application, further, in some embodiments, the aluminum alloy material includes a matrix element Al, and the aluminum alloy material satisfies one or more of the following characteristics (any numerical parameter in the following characteristics may alternatively be selected from any suitable value or range in the context):

the mass percentage of Si element in the aluminum alloy material is 8%-11.5%;
the mass percentage of Sc element in the aluminum alloy material is 0.05%-0.35%;
the mass percentage of B element in the aluminum alloy material is 0.01%-0.4%.
the mass percentage of Mn element in the aluminum alloy material is 0.3%-1.0%;
the mass percentage of Mo element in the aluminum alloy material is 0.02%-0.25%;
the mass percentage of Zr element in the aluminum alloy material is 0.01%-0.2%; and
the mass percentage of Sr element in the aluminum alloy material is 0.02%-0.08%.

Based on any suitable embodiment of this application, further, in some embodiments, the aluminum alloy material includes a matrix element Al, and the aluminum alloy material satisfies one or more of the following characteristics (any numerical parameter in the following characteristics may alternatively be selected from any suitable value or range in the context):

the mass percentage of Si element in the aluminum alloy material is 8.5%-11.5%;
the mass percentage of Sc element in the aluminum alloy material is 0.1%-0.3%;
the mass percentage of B element in the aluminum alloy material is 0.01%-0.25%.
the mass percentage of Mn element in the aluminum alloy material is 0.45%-0.95%;

the mass percentage of Mo element in the aluminum alloy material is 0.04%-0.2%;
the mass percentage of Zr element in the aluminum alloy material is 0.01%-0.15%; and
the mass percentage of Sr element in the aluminum alloy material is 0.02%-0.06%.

Based on any suitable embodiment of this application, further, in some embodiments, the aluminum alloy material includes a matrix element Al, and the aluminum alloy material satisfies one or more of the following characteristics (any numerical parameter in the following characteristics may alternatively be selected from any suitable value or range in the context):

the mass percentage of Si element in the aluminum alloy material is 8.5%-11%;
the mass percentage of Sc element in the aluminum alloy material is 0.1%-0.3%;
the mass percentage of B element in the aluminum alloy material is 0.01%-0.1%;
the mass percentage of Mn element in the aluminum alloy material is 0.45%-0.70%;
the mass percentage of Mo element in the aluminum alloy material is 0.05%-0.1%;
the mass percentage of Zr element in the aluminum alloy material is 0.05%-0.15%; and
the mass percentage of Sr element in the aluminum alloy material is 0.02%-0.05%.

Based on any suitable embodiment of this application, further, in some embodiments, the aluminum alloy material includes, by mass percentage, 8.5%-11.5% of Si element, 0.1%-0.35% of Sc element, 0.01%-0.25% of B element, 0.45%-0.95% of Mn element, 0.05%-0.2% of Mo element, 0.01%-0.15% of Zr element, 0.02%-0.06% of Sr element, a matrix element Al, and an unavoidable impurity element. The content of any of the aforementioned elements may also refer to any suitable range or value in the context.

Based on any suitable embodiment of this application, further, in some embodiments, the aluminum alloy material includes, by mass percentage, 8.5%-11% of Si element, 0.1%-0.3% of Sc element, 0.01%-0.1% of B element, 0.45%-0.70% of Mn element, 0.05%-0.1% of Mo element, 0.05%-0.15% of Zr element, 0.02%-0.05% of Sr element, a matrix element Al, and an unavoidable impurity element. The content of any of the aforementioned elements may also refer to any suitable range or value in the context.

Based on any suitable embodiment of this application, further, in some embodiments, the aluminum alloy material includes, by mass percentage, 8%-11.5% of Si element, 0.05%-0.35% of Sc element, 0.01%-0.4% of B element, 0.3%-1.0% of Mn element, 0.05%-0.25% of Mo element, 0.01%-0.2% of Zr element, 0.02%-0.08% of Sr element, the unavoidable impurity element, and the balance of Al element. The content of any of the aforementioned elements may also refer to any suitable range or value in the context.

Based on any suitable embodiment of this application, further, in some embodiments, the aluminum alloy material includes, by mass percentage, 8%-11.5% of Si element, 0.05%-0.35% of Sc element, 0.05%-0.4% of B element, 0.3%-1.0% of Mn element, 0.05%-0.25% of Mo element, 0.01%-0.2% of Zr element, 0.02%-0.08% of Sr element, the unavoidable impurity element, and the balance of Al element. The content of any of the aforementioned elements may also refer to any suitable range or value in the context.

By adjusting the types and contents of the elements in the aluminum alloy material, the aluminum alloy material can achieve good mechanical properties and excellent corrosion resistance across various content ranges.

Based on any suitable embodiment of this application, further, in some embodiments, the unavoidable impurity element includes Fe element.

Based on any suitable embodiment of this application, further, in some embodiments, a mass percentage of Fe (iron) element in the aluminum alloy material is less than or equal to 0.7%, optionally less than 0.7%.

Based on any suitable embodiment of this application, further, in some embodiments, a mass percentage of the unavoidable impurity element in the aluminum alloy material is less than or equal to 0.7%, optionally less than 0.7%.

Based on any suitable embodiment of this application, further, in some embodiments, the aluminum alloy material includes an AlSiMnFe phase, and optionally, a mass fraction of the AlSiMnFe phase in the aluminum alloy material is less than or equal to 0.2%, further optionally less than or equal to 0.1%. The mass fraction of the AlSiMnFe phase in the aluminum alloy material may alternatively be any of the following percentages, less than or equal to any of the following percentages, or selected from a range defined by any two of the following percentages: 0.01%, 0.02%, 0.05%, 0.06%, 0.08%, 0.1%, 0.12%, 0.15%, 0.16%, 0.18%, 0.2%, and the like. The mass fraction of the AlSiMnFe phase in the aluminum alloy material may alternatively be selected from any suitable one of the following ranges: less than or equal to 0.15%, 0.01%-0.2%, 0.01%-0.15%, 0.01%-0.1%, and the like.

Based on any suitable embodiment of this application, further, in some embodiments, the aluminum alloy material includes an AlSiMnFe/Sc alloy phase; and optionally, a mass fraction of the AlSiMnFe/Sc alloy phase in the aluminum alloy material is less than or equal to 0.2%, optionally 0.07%-0.2%. The mass fraction of the AlSiMnFe/Sc alloy phase in the aluminum alloy material may alternatively be any of the following percentages, less than or equal to any of the following percentages, or selected from a range defined by any two of the following percentages: 0.07%, 0.08%, 0.1%, 0.12%, 0.15%, 0.16%, 0.18%, 0.2%, and the like.

Based on any suitable embodiment of this application, further, in some embodiments, the aluminum alloy material satisfies one or more of the following characteristics (any numerical parameter in the following characteristics may alternatively be selected from any suitable value or range in the context):

the mass percentage of Fe element in the aluminum alloy material is less than or equal to 0.7%, and optionally, the mass percentage of the unavoidable impurity element in the aluminum alloy material is less than 0.7% (may alternatively be selected from any suitable content or range in the context);

the aluminum alloy material includes an AlSiMnFe phase; and optionally, a mass fraction of the AlSiMnFe phase in the aluminum alloy material is less than or equal to 0.2%, further optionally less than or equal to 0.1% (may alternatively be selected from any suitable content or range in the context); and

the aluminum alloy material includes an AlSiMnFe/Sc alloy phase; and optionally, a mass fraction of the AlSiMnFe/Sc alloy phase in the aluminum alloy material is less than or equal to 0.2%, optionally 0.07%-0.2% (may alternatively be selected from any suitable content or range in the context).

During the casting of aluminum alloy, Fe impurities often unavoidably exist in the formed aluminum alloy. A small amount of Fe element (for example, the Fe content is less than or equal to 0.7wt%) facilitates mold release during casting, but a large Fe content is likely to reduce the corrosion resistance of the aluminum alloy material. Fe impurities can form needle-like AlSiMnFe phases, and the AlSiMnFe phases have a certain strengthening effect. However, due to a large contact area and a significant potential difference between an AlSiMnFe phase and an $\alpha$-Al matrix, localized galvanic corrosion may occur. Controlling the Fe content within a lower range helps to reduce an adverse impact of Fe on the corrosion resistance.

Additionally, the introduction of Sc element can convert some needle-like AlSiMnFe phases into fine and dendritic AlSiMnFe/Sc alloy phases, reducing a detrimental effect of the needle-like AlSiMnFe phases on the corrosion resistance.

Based on any suitable embodiment of this application, further, in some embodiments, a mass percentage of Mg (magnesium) element in the aluminum alloy material is less than or equal to 0.1, optionally less than or equal to 0.01%, further optionally 0%. The mass percentage of Mg element in the aluminum alloy material may alternatively be any of the following percentages, less than or equal to any of the following percentages, or selected from a range defined by any two of the following percentages: 0.01%, 0.02%, 0.05%, 0.06%, 0.08%, and the like.

Based on any suitable embodiment of this application, further, in some embodiments, a mass percentage of Zn (zinc) element in the aluminum alloy material is less than or equal to 0.1%, optionally less than or equal to 0.01%, further optionally 0%. The mass percentage of Zn element in the aluminum alloy material may alternatively be any of the following percentages, less than or equal to any of the following percentages, or selected from a range defined by any two of the following percentages: 0.01%, 0.02%, 0.05%, 0.06%, 0.08%, and the like.

Based on any suitable embodiment of this application, further, in some embodiments, a mass percentage of Cu (copper) element in the aluminum alloy material is less than or equal to 0.01%, optionally 0%. The mass percentage of Cu element in the aluminum alloy material may alternatively be any of the following percentages, less than or equal to any of the following percentages, or selected from a range defined by any two of the following percentages: 0.005%, 0.006%, 0.008%, 0.01%, and the like.

Based on any suitable embodiment of this application, further, in some embodiments, the aluminum alloy material satisfies one or more of the following characteristics

any numerical parameter in the following characteristics may alternatively be selected from any suitable value or range in the context):

the mass percentage of Mg element in the aluminum alloy material is less than or equal to 0.1, optionally less than or equal to 0.01%, further optionally 0% (may alternatively be selected from any suitable content or range in the context);

the mass percentage of Zn element in the aluminum alloy material is less than or equal to 0.1, optionally less than or equal to 0.01%, further optionally 0% (may alternatively be selected from any suitable content or range in the context); and

the mass percentage of Cu element in the aluminum alloy material is less than or equal to 0.01%, optionally 0% (may alternatively be selected from any suitable content or range in the context).

In some known aluminum alloy materials, one or more of Mg, Zn, and Cu elements are often added to provide a strengthening effect. The aluminum alloy material provided by the first aspect can effectively achieve good mechanical properties and excellent corrosion resistance while limiting the contents of Mg, Zn, and Cu at low levels.

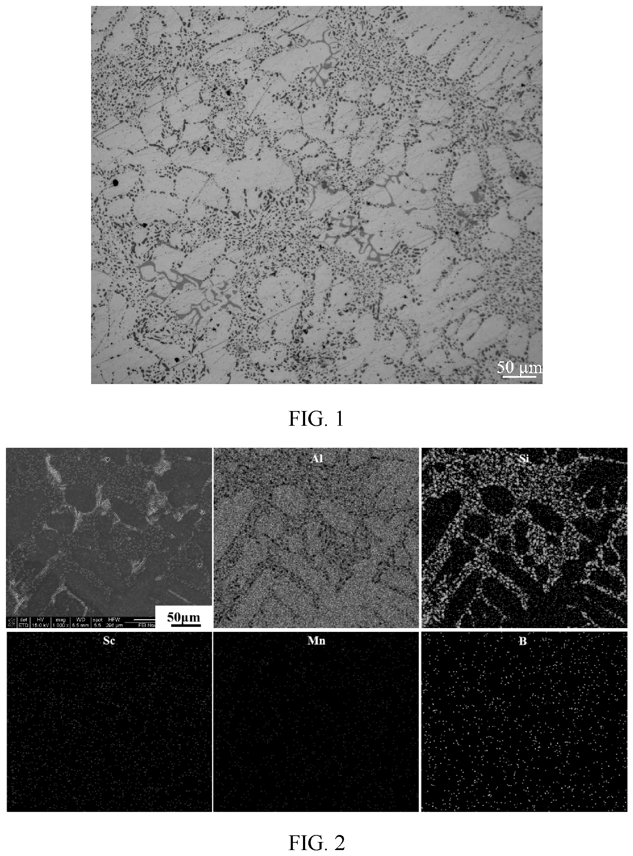

In some embodiments, by properly designing the element composition and element content, the aluminum alloy material has a microstructure as shown in FIG. 1: mainly including primary $\alpha$-Al crystals and an Al-Si eutectic structure, as well as alloy phases such as $MnAl_6$ and AlSiMnFe/Sc.

According to another aspect of this application, a preparation method of the aluminum alloy material according to the first aspect of this application is provided.

In some embodiments, a preparation method of an aluminum alloy material is provided, including the following steps.

S100 (Smelting): Heat and melt an aluminum ingot, add ingredients determined according to a nominal composition of the aluminum alloy material in the form of intermediate alloys, and perform melting and slag removal to prepare a refined melt.

S200 (Molding): Perform cast molding on the refined melt to prepare an ingot.

S300 (Heat treatment): Perform heat treatment and cooling on the ingot to obtain the aluminum alloy material.

In this application, unless otherwise specified, "nominal composition" refers to a theoretical value or designed value of a target composition.

In step S100, the refined melt is prepared through smelting. The prepared refined melt is also referred to as a refined aluminum alloy melt.

In this application, "smelting" has a well-known meaning in the art, and refers to the operation of heating, melting, and tempering a solid metal, which is one of the processes for casting alloys. Typically, the smelting process requires the use of a smelting furnace, where other components for preparing the alloy are molten in the smelting furnace, and after operations such as slag removal and refining, the materials are molten to form a required alloy. The other components for preparing the alloy may include a metal ingot for providing a matrix element, and a necessary alloy component. In this application, before cast molding, smelting is performed to obtain a refined melt containing the components required for the aluminum alloy material. Under a condition that the nominal composition of the aluminum alloy material is determined, those skilled in the art can reasonably determine an implementation manner of the smelting.

Each alloy element can be added in the form of an intermediate alloy, but is not limited thereto. Under the condition that the nominal composition of the aluminum alloy material is determined, those skilled in the art can select an appropriate addition temperature and addition time based on the characteristics of each alloy element (for example, melting point), ensuring that the materials remain in a molten state throughout the process from heating and melting the aluminum ingot to obtaining the refined melt.

For amounts of some elements added, a burning loss rate may need to be considered.

In some embodiments, the following ingredients of the alloy elements are added: AlSi20, AlMn10, AlMo60, AlZr10, AlSr10, AlSc2, AlB3, and Al. The numbers each represent an atom quantity ratio of the elements (or referred to as an atomic ratio), and different numbers correspond to different alloy designations. Those skilled in the art are familiar with the meanings of the corresponding designations.

In some embodiments, the ingredients determined according to the nominal composition of the aluminum alloy material may include AlSi20, AlMn10, AlMo60, AlZr10, AlSr10, AlSc2, and AlB3, where all alloy elements except aluminum are added in the form of intermediate alloys.

In this application, unless otherwise specified, "melting" means that the materials are smelted in a molten state, so that the elements in the materials are diffused into each other and mixed thoroughly to form a uniform liquid melt.

Without limitation, melting includes refining.

In this application, "refining" has a well-known meaning in the art, and refers to a step of obtaining a high-purity alloy by removing impurities and impure substances. Suitable refining methods can be selected based on the compositional characteristics of the aluminum alloy material. Without limitation, refining can be achieved by adding a refining agent. A refining agent used in this application may include common refining agents for casting aluminum alloys, such as high-efficiency refining agents (non-toxic refining agents), and degassing refining agents.

In this application, "slag removal" has a well-known meaning in the art, and refers to a step of removing slag from the melt during the smelting process. During the melting process, floating slag may appear on the surface of the melt, and the floating slag can be removed through slag removal. Slag removal may be performed once or multiple times.

In step S200, the refined melt obtained after smelting is subjected to cast molding to prepare an ingot. The prepared ingot is also referred to as an aluminum alloy ingot.

The ingot prepared through cast molding has a specific shape and size. The ingot may have a preset shape and size. The preset shape and preset size may be determined based on a sample tested in a test or based on actual needs. The shape and size of the ingot may be controlled based on the shape and size of a mold used during casting.

In step S300, the ingot obtained through cast molding is thermally treated to obtain a target aluminum alloy material.

Heat treatment can be achieved by maintaining the temperature of the ingot under a certain temperature condition, and the heat treatment can be ended by cooling.

In the heat treatment step of the ingot, heat treatment may be performed in a manner of maintaining the temperature, and an appropriate maintained temperature (also referred to as an annealing temperature) and temperature maintaining time can be selected based on the size of the ingot, so as to achieve a good annealing effect. Typically, the maintained temperature for annealing may be slightly lower than a melting point, such as 70%-80% of the melting point, as a non-limiting example. A larger ingot usually requires a longer temperature maintaining time for heat treatment, and a longer temperature maintaining time helps to improve the annealing effect. The temperature maintaining time can be controlled within a certain duration range to achieve a good annealing effect while minimizing overburning and grain coarsening. Frequent slag removal during the temperature maintaining process is conducive to obtaining a well-formed ingot. An appropriate temperature maintaining time can be selected based on the size of the ingot. Generally, the temperature maintaining time for heat treatment is at least 0.5 h and may be any of the following durations or selected from a range formed by any two of the following durations: 1 h, 2 h, 3 h, 5 h, 6 h, 8 h, 10 h, 15 h, 20 h, 25 h, 30 h, 35 h, 40 h, 45 h, 48 h, 50 h, and the like. Taking an ingot with dimensions of 20 mm × 35 mm × 10 mm as an example, an annealing time may be 1.5 h-3 h, such as 1.5 h, 2 h, 2.5 h, or 3 h.

Those skilled in the art can select appropriate process parameters to effectively reduce or eliminate intragranular segregation of elements in the aluminum alloy, achieving homogenization and improving the comprehensive performance of the mechanical properties and corrosion resistance of the aluminum alloy material.

In some embodiments, the step of performing heat treatment and cooling on the ingot includes maintaining the temperature of the ingot and cooling the ingot.

In some embodiments, in the step of maintaining the temperature of the ingot and cooling the ingot, the maintained temperature may be 450°C-620°C, further optionally 540°C-620°C. The temperature maintaining time may be determined with reference to the aforementioned method. In some embodiments, the temperature maintaining time may be 1 h-3 h, further optionally 1 h-2 h, such as 1 h, 1.5 h, 2 h, or 2.5 h. In some other embodiments, the temperature maintaining time may be 36 h-48 h, further optionally 36 h-45 h, such as 36 h, 40 h, 45 h, 48 h, and the like.

In some embodiments, in the step of performing heat treatment and cooling on the ingot, the ingot is cooled to 20°C-30°C.

Without limitation, a cooling medium may be inert gas or oil, and air cooling, or furnace cooling may also be used.

In some embodiments, step S100 includes steps S110, S120, and S130.

In some embodiments, step S110 includes: heating an aluminum ingot until the ingot is molten, and adding an ingredient containing Mn for smelting, to obtain a first melt.

In some embodiments, step S120 includes: cooling the first melt, adding an ingredient containing Si, Mo, Zr, Sc, and B elements to the cooled first melt in a molten state for smelting, to obtain a second melt.

In some embodiments, step S130 includes: performing slag removal on the second melt, adding a refining agent, and adding an ingredient containing Sr element for refining, to obtain a refined melt.

It should be noted that the slag removal in step S130 may be performed simultaneously with step S110 or step S120.

Adding Sr element last is more conducive to exerting a modification effect of Sr element on alloy phases.

In some embodiments, a preparation method of an aluminum alloy material is provided, including the following steps.

S110: Heat an aluminum ingot until the aluminum ingot is molten, and add an ingredient containing Mn element for smelting, to obtain a first melt.

S120: Cool the first melt, and add an ingredient containing Si, Mo, Zr, Sc, and B elements to the cooled first melt in a molten state for smelting, to obtain a second melt.

S130: Perform slag removal on the second melt, add a refining agent, and add an ingredient containing Sr element for refining, to obtain a refined melt.

S200: Perform cast molding on the refined melt to prepare an ingot.

S300: Perform heat treatment and cooling on the ingot to obtain an aluminum alloy material.

In this application, the ingredient containing element X may be referred to as "X ingredient". As an example, the ingredient containing Mn element may be referred to as Mn ingredient.

Typically, amounts of the ingredients added can be measured and determined based on the element composition of the aluminum alloy material and the burning loss rate of each element.

In the preparation process of the aluminum alloy material, after the matrix element is molten, the ingredient containing Mn element is added first for smelting, which facilitates a mold release process and can reduce the introduction of Fe element into a mold.

In some embodiments, in the step of heating the aluminum ingot until the aluminum ingot is molten, the aluminum ingot is heated to 740°C-760°C. Non-limiting examples of heating temperatures include 740°C, 750°C, 760°C, and the like.

In some embodiments, after the step of heating the aluminum ingot until the aluminum ingot is molten and before the step of adding an ingredient containing Mn element for smelting, a temperature maintaining step is further included, with a maintained temperature being 740°C-760°C.

In some embodiments, in the step of adding an ingredient containing Mn element for smelting, a smelting temperature may be 740°C-760°C.

In some embodiments, after the step of cooling the first melt and before the step of adding an ingredient containing Si, Mo, Zr, Sc, and B elements to the cooled first melt in a molten state for smelting, a temperature maintaining step may further be included, with a maintained temperature being 710°C-730°C.

In some embodiments, a preparation method of an aluminum alloy material is provided, including the following steps.

S110: Heat an aluminum ingot to 740°C-760°C, maintain the temperature to melt the aluminum ingot, and add an ingredient containing Mn element for smelting, to obtain a first melt.

S120: Cool the first melt to 710°C-730°C, add an ingredient containing Si, Mo, Zr, Sc, and B elements to the first melt for smelting, to obtain a second melt.

S130: Perform slag removal on the second melt, add a refining agent, add an ingredient containing Sr element for refining, to obtain a refined melt.

S200: Perform cast molding on the refined melt to prepare an ingot.

S300: Maintain the ingot at 450°C-560°C (optionally 540°C-560°C) for an appropriate time (an appropriate temperature maintaining time is selected based on the size of the ingot, for example, 36 h-48 h or 1 h-2 h), and cool the ingot (water may be used to cool the ingot to room temperature), to obtain an aluminum alloy material.

The ingredient containing Mn element may be an aluminum-manganese intermediate alloy.

In some embodiments, a preparation method of an aluminum alloy material is provided, including the following steps.

S100: Add a pure aluminum ingot and heat it to 740°C-760°C, maintain the temperature to melt the ingot, then add an ingredient containing Mn element in the form of an aluminum-manganese intermediate alloy, cool the ingredient containing Mn element to 710°C-730°C after the ingredient is molten, add an alloy element ingredient containing Si, Mo, Zr, Sc, and B elements for melting, perform standing and slag removal after the alloy element ingredient is molten, add a refining agent, add an ingredient containing Sr element after slag removal, and perform cast molding to obtain an ingot. Optionally, Mn, Si, Mo, Zr, Sc, and B elements are respectively introduced in the form of respective intermediate alloys.

S200: Leave the ingot standing at 450°C-620°C (optionally 540°C-620°C), maintain the temperature for an appropriate time (an appropriate temperature maintaining time is selected based on the size of the ingot, for example, 36 h-45 h or 1 h-2 h), and then the ingot is water-cooled to room temperature (for example, 20°C-30°C), to obtain an aluminum alloy material. The obtained aluminum alloy material can be used as an aluminum alloy material for battery boxes, including but not limited to lithium battery boxes.

According to a second aspect of this application, an aluminum alloy structural component is provided, which is a formed body of the aluminum alloy material according to the first aspect.

In this application, unless otherwise specified, "formed body of the aluminum alloy material" refers to a solid made from the aluminum alloy material and having a specific shape and size. The shape and size may be defined by a mold during the preparation of the aluminum alloy material, enabling the prepared aluminum alloy material to become solid with a specific shape and size.

The aluminum alloy structural component, as a formed body of the aluminum alloy material according to the first aspect, can have good mechanical properties and excellent corrosion resistance, can be used as an aluminum alloy structural component in a battery box, and can effectively extend the service life of the battery box.

According to a third aspect of this application, a preparation method of an aluminum alloy structural component is provided, and preparation can be performed by using the preparation method of the aluminum alloy material described above.

In some embodiments, a preparation method of an aluminum alloy structural component is provided, including the following steps.

S100 (Smelting): Heat and melt an aluminum ingot, add ingredients determined according to a nominal composition of the aluminum alloy material in the form of intermediate alloys, and perform melting and slag removal to prepare a refined aluminum alloy melt.

S200 (Molding): Perform cast molding on the refined aluminum alloy melt to prepare an aluminum alloy ingot.

S300 (Heat treatment): Perform heat treatment and cooling on the aluminum alloy ingot to obtain an aluminum alloy structural component.

In step S100, the aluminum alloy material may be the aluminum alloy material according to the first aspect.

The aluminum alloy ingot prepared in step S200 has a specific shape and size, and the aluminum alloy material prepared after the heat treatment and cooling in step S300 also has a specific shape and size, so that an aluminum alloy structural component can be obtained while an aluminum alloy material is obtained.

The implementations of steps S100, S200, and S300 may also refer to the preparation method of the aluminum alloy material described above and refer to the implementations and embodiments below.

The aluminum alloy structural component can be prepared by using an aluminum ingot to provide a matrix element, supplemented by corresponding alloy elements through melting, slag removal, cast molding, heat treatment, and cooling. The shape and size of the aluminum alloy structural component can be controlled by selecting a mold of a corresponding shape and size during the cast molding step. It can be understood that the shape and size of the cooled structural component can also be adjusted to obtain an aluminum alloy structural component of a target shape and size, for example, using methods including but not limited to sandblasting and polishing.

According to a fourth aspect of this application, a battery box is provided, where the battery box satisfies at least one of the following characteristics:

at least a portion of a structural component in the battery box includes the aluminum alloy material according to the first aspect;
the battery box includes the aluminum alloy structural component according to the second aspect; and
the battery box includes an aluminum alloy structural component prepared by the preparation method of an aluminum alloy structural component according to the third aspect.

The battery box can provide protection for an internal battery cell. On one hand, the battery box needs to have good mechanical strength to reduce the degree of damage to the battery upon impact. On the other hand, the battery box is susceptible to damage caused by galvanic corrosion during storage and battery cycling. Therefore, the battery box needs to have a certain level of corrosion resistance. A battery box made of the aforementioned aluminum alloy material or aluminum alloy structural component can meet both the requirements for mechanical properties and corrosion resistance of the battery box.

Without limitation, a part of the battery box including the aforementioned aluminum alloy material may include one or more of a bottom plate, a panel, and a bracket, but is not limited to these parts. The part of the battery box including the aforementioned aluminum alloy material may be integrally formed or may be fixedly connected in an appropriate manner such as seamless welding, to better match the required shape and size.

Based on any suitable embodiment of this application, further, in some embodiments, the battery box includes a lithium battery box.

The aforementioned aluminum alloy material is applicable to lithium battery boxes, but is not limited thereto.

According to a fifth aspect of this application, a battery system is provided, including the battery box according to the fourth aspect and a battery cell located inside the battery box described.

Based on any suitable embodiment of this application, further, in some embodiments, the battery cell includes a liquid electrolyte.

According to a sixth aspect of this application, an electric apparatus is provided, including at least one of the aluminum alloy material according to the first aspect, the aluminum alloy structural component according to the second aspect, an aluminum alloy structural component prepared by the preparation method of an aluminum alloy structural component according to the third aspect, the battery box according to the fourth aspect, and the battery system according to the fifth aspect.

According to a seventh aspect of this application, an application of the aluminum alloy material according to the first aspect in preparation of at least one of an aluminum alloy structural component, a battery box, a battery system, and an electric apparatus is provided.

Using the aforementioned aluminum alloy material, the aforementioned aluminum alloy structural component, or a battery box including the aforementioned aluminum alloy material or aluminum alloy structural component in one or more of the battery system and the electric apparatus helps to improve the reliability and service life of the battery system and electric apparatus, not only reducing the degree of damage to the battery upon impact but also improving the corrosion resistance of the battery box, including but not limited to improving the resistance to galvanic corrosion.

In this application, unless otherwise specified, "battery cell" refers to a basic unit capable of realizing conversion between chemical energy and electrical energy.

In some embodiments, the battery cell is a fuel battery, a corresponding battery box is a fuel battery box, and a corresponding battery system is a fuel battery system.

In this application, unless otherwise specified, "fuel battery box" refers to a battery box with a fuel battery cell inside. In this application, unless otherwise specified, "fuel battery" has a well-known meaning in the art, and refers to a chemical apparatus that directly converts chemical energy of fuel into electrical energy; and "fuel battery cell" refers to a battery cell that directly converts chemical energy of fuel into electrical energy.

In some embodiments, the battery cell is a lithium battery, the corresponding battery box is a lithium battery box, and the corresponding battery system is a lithium battery system. In this case, active ions in the battery cell include lithium ions. The lithium battery may be a lithium-ion secondary battery.

In this application, unless otherwise specified, "lithium battery box" refers to a battery box with a lithium battery cell inside. In this application, unless otherwise specified, "lithium battery" has a well-known meaning in the art, and refers to a type of batteries where the active ions include lithium ions; and "lithium battery cell" refers to a battery cell where the active ions include lithium ions.

In some embodiments, the battery cell is a secondary battery, the corresponding battery box is a secondary battery box, and the corresponding battery system is a secondary battery system. In some embodiments, the battery cell may include a positive electrode plate, a negative electrode plate, and an electrolyte. During charging and discharging of a battery, active ions are intercalated and deintercalated back and forth between the positive electrode plate and the negative electrode plate. The electrolyte conducts active ions between the positive electrode plate and the negative electrode plate. In some embodiments, the positive electrode plate, negative electrode plate, and separator may be made into an electrode assembly through a winding process or a lamination process.

When the battery cell in the battery system includes a liquid electrolyte, high requirements are imposed on the corrosion resistance of the battery box, and the aforementioned battery system and electric apparatus are more likely to meet storage and usage requirements.

The battery box includes at least one battery cell inside. The battery box may include one or more battery cells inside. The battery cell is not limited to any particular shape in this application, and may be cylindrical, prismatic, or of any other shapes. In some embodiments, the battery cell may include an outer package.

The outer package of the battery cell may be configured to encapsulate the aforementioned electrode assembly and electrolyte, but is not limited thereto.

In some embodiments, the outer package of the battery cell may be a hard shell, such as a hard plastic shell, aluminum shell, or steel shell. The outer package of the battery cell may alternatively be a soft pouch, such as a pouch-type soft package. The material of the soft pouch may be plastic. Further, non-limiting examples of plastic may include one or more of polypropylene, polybutylene terephthalate, and polybutylene succinate.

In some embodiments, the outer package may include a shell and a cover plate. The shell may include a bottom plate and side plates connected to the bottom plate, where the bottom plate and the side plates enclose an accommodating cavity. The shell has an opening communicating with the accommodating cavity, and the cover plate can cover the opening to seal the accommodating cavity.

Without limitation, the aforementioned electrode assembly may be encapsulated in the accommodating cavity. In some embodiments, the liquid electrolyte may infiltrate into the electrode assembly, and there may be one or more electrode assemblies contained in the battery cell. Those skilled in the art can make a selection according to actual needs.

The battery system may be a battery module 4 or a battery pack 1.

The battery module 4 includes at least one battery cell 5. There may be one or more battery cells 5 contained in the battery module 4, and those skilled in the art can select an appropriate quantity of the battery cells based on the application and capacity of the battery module.

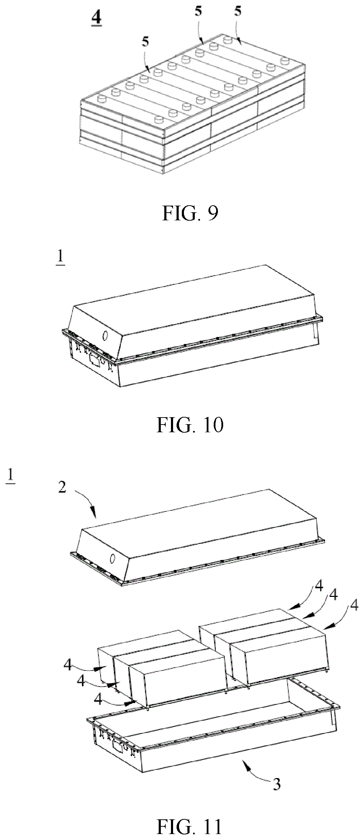

FIG. 9 shows a battery module 4 as an example. Referring to FIG. 9, in the battery module 4, multiple battery cells 5 may be sequentially arranged along a length direction of the battery module 4. Certainly, the battery cells 5 may alternatively be arranged in any other manner. Further, the multiple battery cells 5 may be fixed by a fastener. In some embodiments, the battery module 4 may further include a housing with an accommodating space, and the multiple battery cells 5 are accommodated in the accommodating space.

In some embodiments, the aforementioned battery module 4 can alternatively be assembled into a battery pack 1, and there may be one or more battery modules contained in the battery pack. Those skilled in the art can select an appropriate quantity based on the application and capacity of the battery pack.

In some embodiments, the battery module 4 may include a battery box, where the battery box provides an accommodating space, with multiple battery cells 5 accommodated in the accommodating space.

FIG. 10 and FIG. 11 show a battery pack 1 as an example. Referring to FIG. 10 and FIG. 11, the battery pack 1 may include a battery box and multiple battery modules 4 disposed in the battery box. The battery box includes an upper box body 2 and a lower box body 3, where the upper box body 2 can cover the lower box body 3 to form a closed space for accommodating the battery modules 4. The multiple battery modules 4 may be arranged in the battery box in any manner.

The battery cell can be used as a power source for an electric apparatus or as an energy storage unit for an electric apparatus. The electric apparatus may include mobile devices (for example, mobile phones and laptops), electric vehicles (for example, battery electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

A battery cell or battery system can be selected for an electric apparatus based on usage requirements of the electric apparatus.

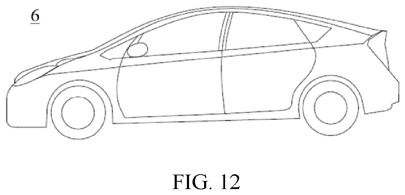

FIG. 12 shows an electric apparatus 6 as an example. The electric apparatus 6 is a battery electric vehicle, hybrid electric vehicle, a plug-in hybrid electric vehicle, or the like. To meet the high power and high energy density requirements of the electric apparatus on the battery cell or battery system, a battery pack or battery module can be used.

As another example, the electric apparatus may be a mobile phone, a tablet, a laptop, or the like. Such electric apparatus typically requires a lightweight design and may use a battery cell or battery system as a power source.

The following provides some more detailed examples of this application. The examples described below are exemplary, are only used to explain this application, and are not construed as limiting this application. If techniques or conditions are not specified in the examples, they are performed according to the descriptions above, or performed according to the techniques or conditions described in the literature in the field, or performed according to product specifications. Reagents or instruments used without specifying the manufacturer are all conventional products that are commercially available or can be synthesized from commercially available products in a conventional manner.

In the examples below, room temperature refers to 20°C-30°C.

It can be understood that an ingot with a preset shape and size can also be prepared into another shape and size to meet the requirements of different scenarios, and is not limited to required shape and size of a sample for test. A same refining agent is used in the examples below.

I. Preparation of aluminum alloy material

(1) A pure aluminum ingot was added and heated to 740°C-760°C, and maintained at the temperature until molten; an ingredient containing Mn element was added in the form of an aluminum-manganese intermediate alloy; after the ingredient containing Mn element was molten, the temperature was lowered to 710°C-730°C; an alloy element ingredient containing Si, Mo, Zr, Sc, and B elements were added for melting; after the alloy element ingredient was molten, a resulting mixture was left standing for slag removal; a refining agent was added; after slag removal, an ingredient containing Sr element was added; and then cast molding was performed to obtain an ingot with a preset shape and preset size, where the preset shape and preset size were required size of a sample for test.

(2) The ingot was left standing at 450°C-620°C (optionally 540°C-620°C), maintained at that temperature for 1 h-2 h, then water-cooled to room temperature (for example, 20°C-30°C), to obtain an aluminum alloy material. The obtained aluminum alloy material can be used as a primary material or constituent material for battery boxes, including but not limited to a primary material or constituent material for lithium battery boxes and fuel battery boxes.

II. Examples and comparative examples

Example 1.

(1) Selection of alloy composition

By mass percentage, an aluminum alloy material includes the following constituent elements (nominal composition): Si: 8.5%, Mn: 0.45%, Mo: 0.05%, Zr: 0.01%, Sr: 0.02%, Sc: 0.1%, B: 0.05%, and the balance of Al. Reference may be made to Table 1.

An ingredient list is as shown in Table 1.

Taking Mn element as an example, a corresponding ingredient of Mn element (as shown in Table 1) may be referred to as "Mn ingredient".

Table 1 Composition proportion table for smelting of aluminum alloy material in Example 1

| Ingredient | Si ingredient | Mn ingredient | Mo ingredient | Zr ingredient | Sr ingredient | Sc ingredient | B ingredient | |
|---|---|---|---|---|---|---|---|---|
| | AlSi20 | AlMn10 | AlMo60 | AlZr10 | AlSr10 | AlSc2 | AlB3 | Al |
| Mass (kg) | 0.55 | 0.06 | 0.001 | 0.005 | 0.001 | 0.1 | 0.005 | Bal. |

In Table 1, Bal. indicates a matrix element, which represents the remaining part in Table 1.

(2) Alloy smelting

A pure aluminum ingot was added to a smelting furnace, heated to 750°C, and maintained at that temperature until molten; then, Mn element was added in the form of an aluminum-manganese intermediate alloy; after the Mn ingredient was molten and the temperature was lowered to 720°C, corresponding ingredients of Si, Mo, Zr, Sc, and B elements were added for melting; after these elements were molten, a resulting mixture was left standing for slag removal; a refining agent was added; after slag removal, a corresponding ingredient of Sr element was added; and ultimately, cast molding was performed to obtain an ingot.

(3) Heat treatment

The ingot was left standing at 580°C, maintained at that temperature for 40 h, and then water-cooled to room temperature, to obtain an aluminum alloy material.

Example 2. The aluminum alloy ingot and the aluminum alloy material were prepared using substantially the same method as in Example 1, except that the alloy composition was different.

By mass percentage, the aluminum alloy material included the following constituent elements (nominal composition): Si: 9.5%, Mn: 0.65%, Mo: 0.10%, Zr: 0.07%, Sr: 0.04%, Sc: 0.2%, B: 0.15%, and the balance of Al.

Example 3. The aluminum alloy ingot and the aluminum alloy material were prepared using substantially the same method as in Example 1, except that the alloy composition was different.

By mass percentage, the aluminum alloy material included the following constituent elements (nominal composition): Si: 11.5%, Mn: 0.95%, Mo: 0.20%, Zr: 0.15%, Sr: 0.06%, Sc: 0.3%, B: 0.25%, and the balance of Al.

Example 4. The aluminum alloy ingot and the aluminum alloy material were prepared using substantially the same method as in Example 1, except that step (2) was different.

Step (2) in Example 4 was as follows: A pure aluminum ingot was added to a smelting furnace, heated to 740°C, and maintained at that temperature until molten; then, Mn element was added in the form of an aluminum-manganese intermediate alloy; after the Mn ingredient was molten and the temperature was lowered to 710°C, Si, Mo, Zr, Sc, and B ingredients were added for melting; after these elements were molten, a resulting mixture was left standing for slag removal; a refining agent was added; after slag removal, an Sr ingredient was added; and ultimately, cast molding was performed to obtain an ingot.

Example 5. The aluminum alloy ingot and the aluminum alloy material were prepared using substantially the same method as in Example 1, except that step (2) was different.

Step (2) in Example 5 was as follows: A pure aluminum ingot was added to a smelting furnace, heated to 760°C, and maintained at that temperature until molten; then, Mn element was added in the form of an aluminum-manganese intermediate alloy; after the Mn ingredient was molten and the temperature was lowered to 730°C, Si, Mo, Zr, Sc, and B ingredients were added for melting; after these elements were melted, a resulting mixture was left standing for slag removal; a refining agent was added; after slag removal, an Sr ingredient was added; and ultimately, cast molding was performed to obtain an ingot.

Example 6: The aluminum alloy ingot and the aluminum alloy material were prepared using substantially the same method as in Example 1, except that step (3) was different.

Step (3) in Example 6 was as follows: The ingot was left standing at 540°C, maintained at that temperature for 1 h, and then water-cooled to room temperature, to obtain an aluminum alloy material.

Example 7. The aluminum alloy ingot and the aluminum alloy material were prepared using substantially the same method as in Example 1, except that step (3) was different.

Step (3) in Example 7 was as follows: The ingot was left standing at 620°C, maintained at that temperature for 1.75 h, and then water-cooled to room temperature, to obtain an aluminum alloy material.

Example 8. The aluminum alloy ingot and the aluminum alloy material were prepared using substantially the same method as in Example 1, except that step (3) was different.

Step (3) in Example 8 was as follows: The ingot was left standing at 450°C, maintained at that temperature for 2 h, and then water-cooled to room temperature, to obtain an aluminum alloy material.

Example 9. The aluminum alloy ingot and the aluminum alloy material were prepared using substantially the same method as in Example 1, except that step (3) was different.

Step (3) in Example 9 was as follows: The ingot was left standing at 550°C, maintained at that temperature for 1.25 h, and then water-cooled to room temperature, to obtain an aluminum alloy material.

Comparative Example 1.

(1) Selection of alloy composition

By mass percentage, the aluminum alloy material included the following constituent elements (nominal composition): Si: 7.5%, Cu: 2.5%, Mg: 0.1%, Zn: 0.2%, Mn: 0.02%, Fe: 0.7%, and the balance of Al.

(2) Alloy smelting

A pure aluminum ingot was added to a smelting furnace, heated to 740°C, and maintained at that temperature until molten; then, Mn was added; after Mn was molten, Cu was added; after the temperature was lowered to 710°C, the remaining alloy elements Si, Ti, Zn, and Sr were added for melting; after these elements were molten, Mg was added; after Mg was molten, a resulting mixture was left standing for slag removal; a refining agent was added; after slag removal, Ti and Sr were added; and ultimately, cast molding was performed to obtain an ingot.

(3) Heat treatment

The ingot was left standing at 550°C, maintained at that temperature for 2 h, and then water-cooled to room temperature, to obtain an aluminum alloy material, which can be used as a material for battery boxes, such as a material for lithium battery boxes or fuel battery boxes.

Comparative Example 2. The aluminum alloy ingot and the aluminum alloy material were prepared using substantially the same method as in Comparative Example 1, except that step (2) was different.

Step (2) in Comparative Example 2 was as follows: A pure aluminum ingot was added to a smelting furnace, heated to 800°C, and maintained at that temperature until molten; then, Mn was added; after Mn was molten, Cu was added; after the temperature was lowered to 750°C, the remaining alloy elements Si, Ti, Zn, and Sr were added for melting; after these elements were molten, Mg was added; after Mg was molten, a resulting mixture was left standing for slag removal; a refining agent was added; after slag removal, Ti and Sr were added; and ultimately, cast molding was performed to obtain an ingot.

Comparative Example 3. The aluminum alloy ingot and the aluminum alloy material were prepared using substantially the same method as in Example 1, except that the alloy composition was substantially consistent with A380 aluminum alloy.

Comparative Example 4. The aluminum alloy ingot and the aluminum alloy material were prepared using substantially the same method as in Example 1, except that the alloy composition was substantially consistent with AlSi9MnMoZr aluminum alloy.

The nominal compositions of the aluminum alloy materials in the examples and comparative examples are shown in Table 2.

**Table 2**

| Example No. | Nominal composition of aluminum alloy (designed element composition) | | | | | | | | |
|---|---|---|---|---|---|---|---|---|---|
| | Content of Si (%) | Content of Mn (%) | Content of Mo (%) | Content of Zr (%) | Content of Sr (%) | Content of Sc (%) | Content of B (%) | Fe (%) | Content of Al |
| Example 1 | 8.5 | 0.45 | 0.05 | 0.01 | 0.02 | 0.1 | 0.05 | ≤ 0.7 | Matrix element |
| Example 2 | 9.5 | 0.65 | 0.1 | 0.07 | 0.04 | 0.2 | 0.15 | ≤ 0.7 | Matrix element |
| Example 3 | 11.5 | 0.95 | 0.2 | 0.15 | 0.06 | 0.3 | 0.25 | ≤ 0.7 | Matrix element |
| Example 4 | Same as Example 1 | | | | | | | ≤ 0.7 | Matrix element |
| Example 5 | Same as Example 1 | | | | | | | ≤ 0.7 | Matrix element |
| Example 6 | Same as Example 1 | | | | | | | ≤ 0.7 | Matrix element |
| Example 7 | Same as Example 1 | | | | | | | ≤ 0.7 | Matrix element |
| Example 8 | Same as Example 1 | | | | | | | ≤ 0.7 | Matrix element |
| Example 9 | Same as Example 1 | | | | | | | ≤ 0.7 | Matrix element |
| Comparative Example No. | Si (%) | Cu (%) | Ti (%) | Mg (%) | Zn (%) | Mn (%) | Sr (%) | Fe (%) | Content of Al |
| Comparative Example 1 | 7.5 | 0.3 | / | 0.1 | 0.2 | 0.02 | / | 0.7 | Matrix element |
| Comparative Example 2 | 8.5 | 0.7 | 0.3 | 0.4 | 0.5 | 1 | 0.04 | ≤ 0.7 | Matrix element |

In Table 2, "/" indicates that the element composition is not actively added.

For a chemical composition of the A380 aluminum alloy in Comparative Example 3, reference can be made to Table 3.

Table 3 Element composition of A380 aluminum alloy

| Element composition | Si | Cu | Mg | Fe | Mn | Zn | Ti | Other elements | Al |
|---|---|---|---|---|---|---|---|---|---|
| Mass percentage of element in alloy (wt%) | 7.5-9.5 | 3.0-4.0 | $\leq 0.1$ | $\leq 2.0$ | $\leq 0.5$ | $\leq 3.0$ | / | Sn: $\leq 0.35$ | Bal. |

In Table 3, "/" indicates that the element is not actively added.

II. Testing and analysis methods

(I) Actual composition analysis

An inductively coupled plasma emission spectrometer (ICP instrument, Avio 5000) was used for elemental analysis to precisely measure an actual composition of the aluminum alloy material.

(II) Microstructure analysis

1. Phase analysis

X-ray diffraction (XRD) was used to detect phases with a high content.

XRD testing instrument and parameters: D8 Advance Da Vinci X, Cu K$\alpha$1, scanning range (2$\theta$): 20°-110°, and scanning speed: 5°/min.

It should be noted that in XRD phase detection, only phases with a content greater than 5wt% exhibited significant diffraction peaks. Low-content alloy phases of which the content was not greater than 5% were analyzed using an energy dispersive spectrometer (EDS, Energy Dispersive Spectrometer).

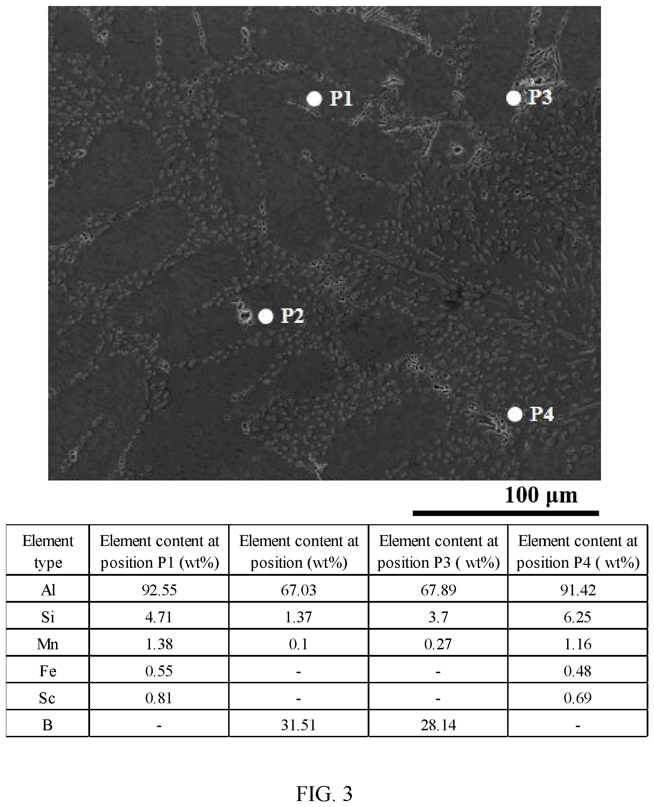

FESEM + EDS testing instrument and parameters: Field Emission Scanning Electron Microscope FEI NOVA NanoSEM 230, with an English name of "FESEM + EDS"; probe type (det): ETD; and acceleration voltage (HV): 15 kV. Other parameters were exemplified in FIG. 3. In FIG. 3, a magnification (mag) was 1000 times (1000×), a working distance (WD) was 6.5 mm, a horizontal field width (HFW) was 298 micrometers ($\mu$m), and a spot diameter (spot) was 5.5 nanometers (nm).

2. Metallographic structure analysis

Instrument and testing parameters: CX40M metallographic microscope, of which the magnifications include 25×, 100×, 20×, 200×, 500×, and 1000×, with other magnifications selectable.

3. Mass fraction analysis method for different alloy phases

Jmatpro simulation calculation was used.

(III) Mechanical property test and corrosion test

The aluminum alloy materials prepared in Examples 1 to 9 and Comparative Examples 1 to 4 were subjected to a hardness test, a tensile test, and a corrosion test in accordance with the method specified in GB/T 4340.1-1999 Metal Vickers Hardness Test-Part 1: Test Method.

1. Hardness test

Instrument: Hardness tester.

Testing parameter: Loading force was 0.1 kg.

2. Tensile test

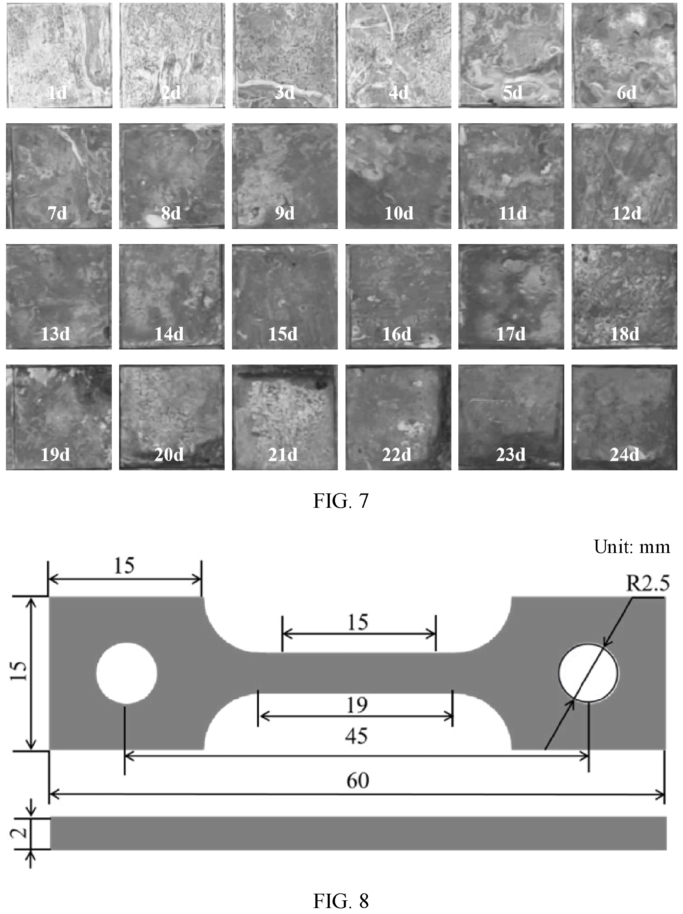

(1) A sample size was shown in FIG. 8 and measured in millimeters (mm), where R2.5 indicated a radius of 2.5 mm.
(2) Testing instrument: Z20 universal electronic testing machine.
(3) Testing and analysis method:

Aluminum alloy material tensile samples were wrapped with a blue film, leaving only a test surface exposed. The total test was performed for 600 h, where during the test, a batch of samples were taken every 24 h for tensile property testing, with at least three parallel samples set for each test.

Mechanical property testing was performed on tensile samples at different corrosion stages to obtain stress-strain curves, and then tensile strength (tensile strength, UTS for short, also referred to as tensile strength or ultimate tensile strength), elongation (elongation, El for short), and yield strength (yield strength, YS for short) were obtained through analysis. A larger elongation indicated better ductility of the material.

(4) Tensile fracture morphology was tested and analyzed using FEI NOVA NanoSEM 230.

3. Corrosion test

(1) Electrochemical corrosion test

The electrochemical corrosion test included: open circuit voltage testing, alternating-current impedance testing, and potentiodynamic polarization testing.

Testing solution: 3.5wt% NaCl aqueous solution.

Before the test, a die-cast aluminum alloy was cut into samples of 10 mm $\times$ 10 mm $\times$ 2 mm, and each sample was cold-mounted with epoxy resin to ensure that only a 1 cm$^2$ test surface was exposed after mounting. The test surfaces were sequentially ground with sandpaper, then polished with a polishing agent until the surfaces were clean and shiny, cleaned with ethanol, and dried for later use.

During the test, the open circuit voltage (OCP) of each sample was first measured. After the OCP stabilized for 60 min, an alternating-current impedance test (EIS) was performed to measure an electrochemical impedance spectrum of the sample at different AC frequencies. A 10 mV alternating-current sine wave was used as an excitation voltage during the test, with a test frequency being controlled within 0.01 Hz-105 Hz.

After the test, EIS results were fitted with an equivalent circuit, and parameters of all components in the equivalent circuit diagram were analyzed. After the alternating-current impedance test, a potentiodynamic polarization test was performed on the sample. Starting from a potential of OCP-300 mV, scanning was performed at a scanning rate of 0.167 mV/s until a current exceeded 1 mA. After the test, ZSimpWin v3.40 software was used to perform Tafel fitting on polarization characteristics of the sample.

(2) Salt spray corrosion test

A 3.5wt% NaCl aqueous solution was used, tested at 35°C.

The macroscopic morphology, microscopic morphology, corrosion mass loss, and corrosion rate of a box material were analyzed every 24 h during a total test duration of 600 h.

Before the test, a non-test surface of a blocky aluminum alloy sample of 15 mm $\times$ 15 mm $\times$ 2 mm was wrapped with a blue film. The test surface was ground, polished, dried, and weighed, with a weight denoted as W0. The total test duration was 600 h. During the test, a batch of samples were taken every 24 h for observation of macroscopic surface morphology and microscopic surface morphology. After observation, a chromic acid cleaner (20 g/L $Cr_2O_3$ + 50 mL/L $H_3PO_4$) was used to remove corrosion products from the sample surface, then weighing was performed to calculate the corrosion rate, and morphology observation was performed. The test duration for the i-th sampling was denoted as Ti, the weight at the i-th sampling was denoted as Wi, and at least three parallel samples were set for each test.

(A) Macroscopic morphology testing method

Sample: Sampling corrosion time points were as described above.

Instrument: CX40M metallographic microscope. The aforementioned testing method could be used.

(B) Microscopic morphology testing method

Sample: Sampling corrosion time points were as described above.

Instrument: FEI NOVA NanoSEM 230. The aforementioned testing method could be used.

(C) Corrosion mass loss and corrosion rate analysis method

A mass loss for the i-th sampling was calculated as W = WO-Wi.

A corrosion rate Ri for the i-th sampling could be calculated using formula (I):

$$\text{Corrosion rate} = (K \times W) / (A \times Ti \times D) \text{ mm/y (I).}$$

In formula (I): K = 8.64 × 104, and K is a time constant;

W is a difference of a mass before the test and a mass after the test, which is equal to WO-Wi, measured in mg;
A is a test surface area of 2.25 $cm^2$, measured in $cm^2$;
Ti is a test duration for the i-th sampling, measured in h;
D = 2.7 $g/cm^3$, where D is a material density; and
"mm/y" represents millimeters per year.

(3) Immersion corrosion test

A 3.5wt% NaCl aqueous solution was used.

Staged immersion corrosion included analyzing the macroscopic morphology, microscopic morphology, and corrosion rate of a box material every 10 d during a total test duration of 30 d. In this application, 1 d = 1 day.

Samples for the immersion corrosion test were blocks of 15 mm × 15 mm × 2 mm.

Before the test, a test surface was ground, polished, rinsed sequentially with deionized water and ethanol, dried, weighed, and stored in a drier for later use. During the test, each sample was placed in a container, and 500 mL corrosion solution was added. The composition of the corrosion solution was: 3.5wt% NaCl aqueous solution. The container was sealed and then placed in a constant-temperature water bath, with a temperature set to 25°C. The samples were taken every 10 d (to be specific, test durations were respectively 10 d, 20 d, and 30 d), and the macroscopic morphology and microscopic morphology of corroded sample surfaces were observed. Subsequently, corrosion products were removed from the sample surfaces, sample masses before and after corrosion were compared, and a corresponding immersion corrosion rate was calculated, where three parallel samples were set for each test.

III. Test result analysis

An experimental group of Example 1 was also referred to as "N2", and the prepared aluminum alloy material was also referred to as the N2 alloy.

(I) Nominal comparison and actual composition

Taking Example 1 as an example, ICP test results show that the actual composition of the aluminum alloy material was quite close to its nominal composition, indicating a good smelting effect. Reference can be made to Table 4. No Cu element, Mg element, or Zn element was detected in any of the examples.

Table 4 Nominal composition and actual composition table for aluminum alloy material in Example 1

| Element type | Element content (wt%) | | | | | | | | |
|---|---|---|---|---|---|---|---|---|---|
| | Si | Mn | Mo | Zr | Sr | Sc | B | Fe | Al |
| Nominal composition (Nominal composition) | 8.5 | 0.45 | 0.05 | 0.01 | 0.02 | 0.1 | 0.05 | / | Matrix element |
| Actual composition (Actual composition) | 9.003 | 0.454 | 0.099 | 0.011 9 | 0.001 | 0.087 | 0.03 | 0.095 | Matrix element |

In Table 4, "/" indicates that the element is not actively added.

In Table 4, element content refers to a mass percentage in the aluminum alloy material, measured in wt%.

(II) Phase analysis

Examples 1 to 7 mainly differed in grain size and alloy phase distribution, which were slightly different. Example 1 was used as an example for description. A metallographic structure of the aluminum alloy material prepared in Example 1 was shown in FIG. 1, a microstructure and element distribution diagram was shown in FIG. 2, and FESEM + EDS point scan diagrams (SEM-EDS images) and analysis results of four exemplary point scan locations were shown in FIG. 3, where "-" in FIG. 3 indicated a value below the detection limit. Based on FIG. 3, a chemical composition and a distribution position of alloy phases could be analyzed.

According to the aforementioned analysis method, the aluminum alloy material in Example 1 mainly included a primary $\alpha$-A1 matrix and a fine fibrous Al-Si eutectic structure, including an AlBx strengthening phase and an AlSiMnSc strengthening phase, as well as alloy phases such as MnAl6 and needle-like AlSiMnFe/Sc. The AlBx strengthening phase included an AlB12 phase, which was a granular B-rich phase. The introduction of Sc reduced the needle-like AlSiMnFe phase, thereby mitigating the adverse effects of impurity phases.

Through simulation calculation, the mass fractions of different alloy phases in the examples respectively met the following conditions.

The mass fraction of the AlBx strengthening phase in the aluminum alloy material ranged from 0.05% to 0.1%.

The mass fraction of the AlSiMnSc strengthening phase in the aluminum alloy material ranged from 0.07% to 0.2%.

The mass fraction of the MnAl6 alloy phase in the aluminum alloy material ranged from 0.55% to 1.25%, further ranged from 0.45% to 1.3%.

The mass fraction of the AlSiMnFe phase in the aluminum alloy material was less than or equal to 0.2%, further less than or equal to 0.1%.

The mass fraction of the AlSiMnFe/Sc alloy phase in the aluminum alloy material was less than or equal to 0.2%, further ranged from 0.07% to 0.2%.

(III) Mechanical property test and corrosion test

According to the test results of the mechanical property test and corrosion test, Examples 1 to 9 all exhibit good mechanical properties and excellent corrosion resistance, which are significantly better than those of Comparative Examples 1 to 4.

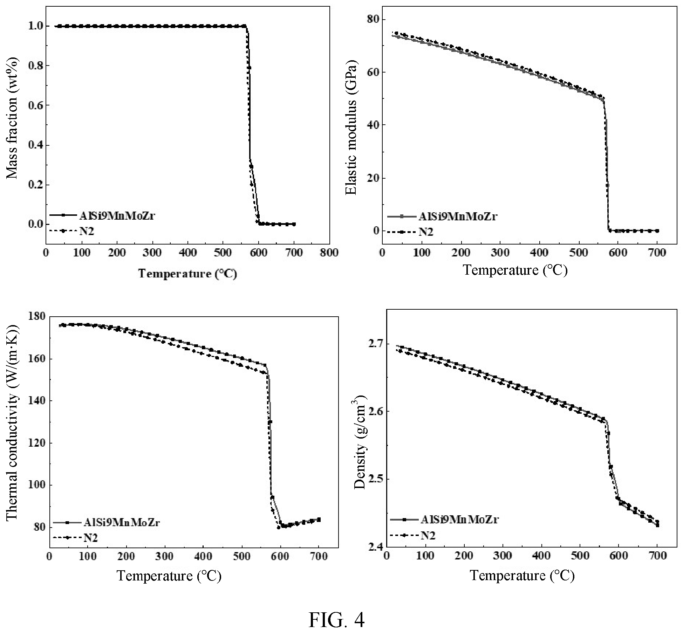

FIG. 4 is a curve showing changes of mass fraction, elastic modulus, thermal conductivity, and density of an AlSi9MnMoZr alloy material and an aluminum alloy material (N2 alloy) in Example 1 with temperature, which is obtained based on Jmatpro analysis, where the mass fraction refers to a mass fraction of the aluminum alloy material at different temperatures relative to an initial mass of the aluminum alloy material in an unheated state, reflecting a thermal weight loss of the aluminum alloy material. These indexes of the N2 alloy

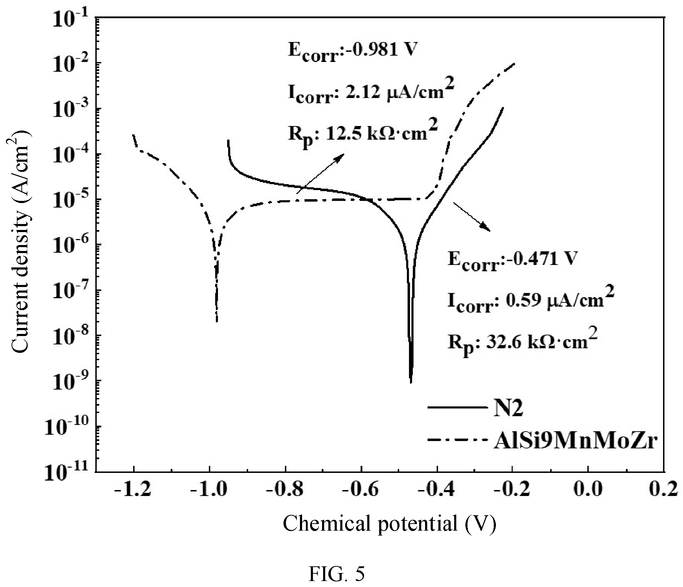

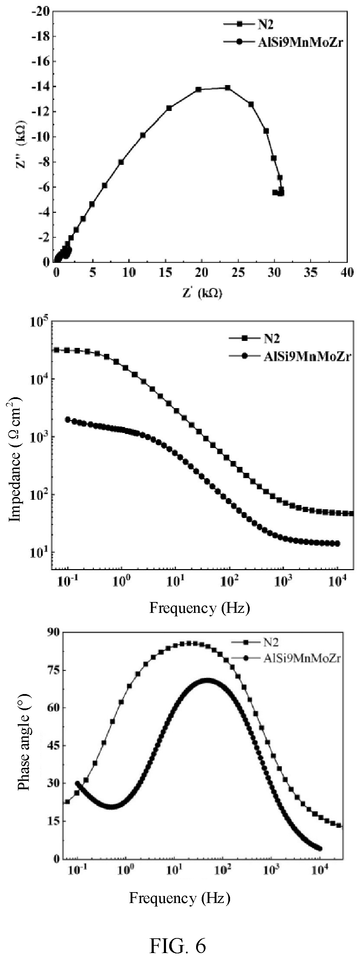

FIG. 5 is a potentiodynamic polarization curve of the aluminum alloy material in Example 1, with a horizontal axis representing a chemical potential (measured in V) and a vertical axis representing a current density (A/cm$^2$). FIG. 6 is a result of an alternating-current impedance test of the aluminum alloy material (N2 alloy) in Example 1. Whether at a low frequency or a high frequency, the N2 alloy exhibits higher impedance and larger phase angle. The N2 alloy has a larger capacitance loop diameter, and has higher Rsl and Rct than the AlSi9MnMoZr alloy, indicating that the N2 alloy has better capacitance performance and higher charge transfer resistance. Additionally, the corrosion current density ($I_{corr}$) of the N2 alloy is only 27.8% of that of the AlSi9MnMoZr alloy, and the polarization resistance (Rp) of the N2 alloy is also higher. $R_{sl}$ and $R_{ct}$ represent a surface resistance and a charge transfer resistance of each alloy serving as a working electrode, respectively.

FIG. 7 is a macroscopic surface morphology diagram of the aluminum alloy material in Example 1 at different corrosion times in the salt spray corrosion test, where sampling is daily performed for 24 days (d).

The mechanical property test and corrosion rate analysis results of the examples and comparative examples are also summarized in Table 5. The corrosion rates in Table 5 are calculated based on the salt spray test results. Other corrosion tests have substantially the same test results as the salt spray tests.

Table 5

| Experimental group | Hardness (HRc) | Tensile strength (MPa) | Elongation (%) | Corrosion rate (mm/y) |
|---|---|---|---|---|
| Example 1 (N2) | 63.44 | 202.21 | 12.19 | 0.05879 |
| Example 2 | 69.55 | 212.38 | 12.55 | 0.05638 |

(continued)

| Experimental group | Hardness (HRc) | Tensile strength (MPa) | Elongation (%) | Corrosion rate (mm/y) |
|---|---|---|---|---|
| Example 3 | 69.67 | 214.57 | 12.45 | 0.05203 |
| Example 4 | 63.29 | 200.09 | 10.46 | 0.06163 |
| Example 5 | 64.84 | 203.31 | 12.06 | 0.05625 |
| Example 6 | 63.16 | 202.67 | 12.35 | 0.05413 |
| Example 7 | 64.33 | 206.69 | 12.03 | 0.5832 |
| Example 8 | 66.23 | 208.16 | 11.21 | 0.5495 |
| Example 9 | 67.58 | 210.22 | 12.39 | 0.5277 |
| Comparative Example 1 | 65.12 | 205.59 | 2.38 | 1.4783 |
| Comparative Example 2 | 63.27 | 203.33 | 10.1 | 0.5604 |
| Comparative Example 3 (A380) | 49.87 | 217 | 2.3 | 0.1507 |

In Table 5, the hardness, tensile strength, and elongation are all initial values of the prepared aluminum alloy material with no corrosion. Comparative Example 3 is used as an example to describe the test analysis results of the comparative examples.

In Comparative Example 3, the A380 alloy mainly includes a columnar or near-equiaxed $\alpha$-Al matrix phase and a fine Al-Si eutectic structure, as well as some bone-like or needle-like alloy phases close to the eutectic structure. In the A380 alloy, a portion of Cu is dissolved in the $\alpha$-Al matrix as a solid solution, while another portion forms a bone-like or needle-like Cu-rich phase, which is identified as an $Al_2Cu$ phase through elemental analysis.

The A380 die-cast aluminum alloy (in Comparative Example 3) is subjected to a salt spray corrosion test, and the macroscopic surface morphology of the sample at different corrosion times show that the A380 alloy exhibits severe corrosion, with a large amount of white corrosion products accumulated on the sample. Due to the occurrence of general corrosion, the alloy surface is quickly covered by the corrosion products in an early corrosion stage (1 d to 6 d). Subsequently, a coverage area and coverage thickness of the corrosion products on the surface both continuously increase along the corrosion time, and the sample surface exhibits a characteristic of transitioning from an initial dark corroded appearance to a coverage with a large amount of white corrosion products.

The microscopic structure results of the A380 die-cast aluminum alloy (in Comparative Example 3) in the early and late stages of the salt spray corrosion test show that the A380 alloy exhibits a uniform general corrosion morphology, and the A380 alloy has severe corrosion, with a large amount of corrosion products produced. There are a large amount of thick corrosion products on the surface of the A380 alloy.

The microscopic structure results of the A380 die-cast aluminum alloy (in Comparative Example 3) after removal of corrosion products show that numerous corrosion pits are distributed around the Al-Si eutectic structure of the A380 alloy, because the $Al_2Cu$ phase distributed close to the Al-Si eutectic structure further exacerbates the intergranular corrosion tendency of the Al-Si eutectic structure. Additionally, a small amount of Cu dissolved in the matrix as a solid solution increases a difference between an intergranular potential and an intragranular intergranular. In addition, the $Al_2Cu$ phase has a more positive potential, and the matrix phase with a high Cu content also has a more positive potential. In this case, the matrix phase with a low Cu content serves as a cathode phase, forming a local electrochemical microcell with the nearby Cu-rich matrix phase and $Al_2Cu$ phase, and causing continuous corrosion of a matrix phase portion of a Cu-lack solid solution, thereby leading to the disappearance of grain boundaries.

The analysis results of mass losses and corresponding corrosion rates of the A380 die-cast aluminum alloy (in Comparative Example 3) at different salt spray corrosion times show that the A380 alloy has both high corrosion weight loss and high corrosion rates.

According to the test analysis results of the tensile tests, the analysis of variation tendency of the mechanical properties with the corrosion time shows that the yield strength and tensile strength of the A380 alloy (in Comparative Example 3) decrease rapidly with the corrosion time, particularly in the early corrosion stage (1 d to 4 d), and the yield strength and tensile strength drop to 77.5% and 76% of the values before corrosion, respectively. Subsequently, performance degradation rate decreases, and finally the final yield strength and tensile strength drop to 65.4% and 52.5% of the values before corrosion, respectively.

The descriptions of the various implementations and embodiments above tend to emphasize the differences between the implementations and embodiments, and their similarities or identical aspects may refer to each other. For brevity, details are not described herein again.

The technical features of the implementations or embodiments described above can be arbitrarily combined. For brevity of the description, not all possible combinations of the technical features in the above implementations or embodiments are described. However, as long as there is no contradiction in the combinations of these technical features, they should be considered within the scope described in this specification.

It should be noted that this application is not limited to the above implementations and embodiments. The above implementations and embodiments are merely exemplary, and implementations having substantially the same configuration as the technical idea and achieving the same effects within the scope of the technical solutions of this application are included in the technical scope of this application. The above implementations and embodiments only express several implementations of this application, and their descriptions are relatively detailed but are not to be construed as limiting the scope of the patent. Furthermore, various modifications that can be conceived by those skilled in the art without departing from the spirit of this application, as well as other methods constructed by combining some constitution elements of the implementations or embodiments, are also included within the scope of this application.

**Claims**

1. An aluminum alloy material, comprising the following constituent elements: Si, Mn, Mo, Zr, Sr, Sc, B, a matrix element Al, and an unavoidable impurity element;

   wherein the aluminum alloy material comprises an Al-Si eutectic phase, an $AlB_x$ strengthening phase, and an AlSiMnSc strengthening phase, the $AlB_x$ strengthening phase comprising at least an $AlB_2$ strengthening phase; a mass percentage of Mo in the aluminum alloy material is less than or equal to 0.25%; and a mass percentage of Zr in the aluminum alloy material is less than or equal to 0.2%.

2. An aluminum alloy material, wherein by mass percentage, the aluminum alloy material comprises 8%-11.5% of Si element, 0.05%-0.35% of Sc element, 0.01%-0.4% of B element, 0.3%-1.0% of Mn element, 0.02%-0.25% of Mo element, 0.01%-0.2% of Zr element, 0.02%-0.08% of Sr element, a matrix element Al, and an unavoidable impurity element.

3. The aluminum alloy material according to claim 2, wherein the aluminum alloy material comprises an Al-Si eutectic phase, an $AlB_x$ strengthening phase, and an AlSiMnSc strengthening phase.

4. The aluminum alloy material according to claim 1 or 3, satisfying one or more of the following characteristics:

   a mass fraction of the $AlB_x$ strengthening phase in the aluminum alloy material is less than or equal to 0.1%, optionally 0.05%-0.1%; and
   a mass fraction of the AlSiMnSc strengthening phase in the aluminum alloy material is less than or equal to 0.2%, optionally 0.07%-0.2%.

5. The aluminum alloy material according to any one of claims 1 to 4, wherein the aluminum alloy material satisfies one or more of the following characteristics:

   a mass percentage of Si element in the aluminum alloy material is 8%-11.5%, optionally 8.5%-11.5%, further optionally 8.5%-11%;
   a mass percentage of Sc element in the aluminum alloy material is 0.05%-0.35%, optionally 0.1%-0.35%, further optionally 0.1%-0.3%;
   a mass percentage of B element in the aluminum alloy material is 0.01%-0.4%, optionally 0.01%-0.25%, further optionally 0.01%-0.1%; and
   a mass percentage of Mn element in the aluminum alloy material is 0.3%-1.0%, optionally 0.45%-0.95%, further optionally 0.45%-0.70%.

6. The aluminum alloy material according to any one of claims 1 to 5, wherein the aluminum alloy material comprises an $MnAl_6$ alloy phase; and optionally, a mass fraction of the $MnAl_6$ alloy phase in the aluminum alloy material is 0.55%-1.25%, further optionally 0.45%-1.3%.

7. The aluminum alloy material according to any one of claims 1 to 6, wherein the aluminum alloy material satisfies one or more of the following characteristics:

a mass percentage of Mo element in the aluminum alloy material is 0.02%-0.25%, optionally 0.04%-0.2%, further optionally 0.05%-0.1%; and

a mass percentage of Zr element in the aluminum alloy material is 0.01%-0.2%, optionally 0.01%-0.15%, further optionally 0.05%-0.15%.

8. The aluminum alloy material according to any one of claims 1 to 7, wherein a mass percentage of Sr element in the aluminum alloy material is 0.02%-0.08%, optionally 0.02%-0.06%, further optionally 0.02%-0.05%.

9. The aluminum alloy material according to any one of claims 1 to 8, wherein by mass percentage, the aluminum alloy material comprises 8.5%-11.5% of Si element, 0.1%-0.35% of Sc element, 0.01%-0.25% of B element, 0.45%-0.95% of Mn element, 0.05%-0.2% of Mo element, 0.01 %-0.15% of Zr element, 0.02%-0.06% of Sr element, a matrix element Al, and an unavoidable impurity element.

10. The aluminum alloy material according to any one of claims 1 to 8, wherein, by mass percentage, the aluminum alloy material comprises 8.5%-11% of Si element, 0.1%-0.3% of Sc element, 0.01%-0.1% of B element, 0.45%-0.70% of Mn element, 0.05%-0.1% of Mo element, 0.05%-0.15% of Zr element, 0.02%-0.05% of Sr element, a matrix element Al, and an unavoidable impurity element.

11. The aluminum alloy material according to any one of claims 1 to 8, wherein, by mass percentage, the aluminum alloy material comprises 8%-11.5% of Si element, 0.05%-0.35% of Sc element, 0.01%-0.4% of B element, 0.3%-1.0% of Mn element, 0.05%-0.25% of Mo element, 0.01%-0.2% of Zr element, 0.02%-0.08% of Sr element, the unavoidable impurity element, and the balance of Al element.

12. The aluminum alloy material according to any one of claims 1 to 8, wherein by mass percentage, the aluminum alloy material comprises 8%-11.5% of Si element, 0.05%-0.35% of Sc element, 0.05%-0.4% of B element, 0.3%-1.0% of Mn element, 0.05%-0.25% of Mo element, 0.01%-0.2% of Zr element, 0.02%-0.08% of Sr element, the unavoidable impurity element, and the balance of Al element.

13. The aluminum alloy material according to any one of claims 1 to 12, wherein the unavoidable impurity element comprises Fe element.

14. The aluminum alloy material according to any one of claims 1 to 13, wherein the aluminum alloy material satisfies one or more of the following characteristics:

a mass percentage of Fe element in the aluminum alloy material is less than or equal to 0.7%, and optionally, a mass percentage of the unavoidable impurity element in the aluminum alloy material is less than 0.7%; the aluminum alloy material comprises an AlSiMnFe phase; and optionally, a mass fraction of the AlSiMnFe phase in the aluminum alloy material is less than or equal to 0.2%, further optionally less than or equal to 0.1%; and

the aluminum alloy material comprises an AlSiMnFe/Sc alloy phase; and optionally, a mass fraction of the AlSiMnFe/Sc alloy phase in the aluminum alloy material is less than or equal to 0.2%, optionally 0.07%-0.2%.

15. The aluminum alloy material according to any one of claims 1 to 14, wherein the aluminum alloy material satisfies one or more of the following characteristics:

a mass percentage of Mg element in the aluminum alloy material is less than or equal to 0.1%, optionally less than or equal to 0.01%, further optionally 0%;

a mass percentage of Zn element in the aluminum alloy material is less than or equal to 0.1%, optionally less than or equal to 0.01%, further optionally 0%; and

a mass percentage of Cu element in the aluminum alloy material is less than or equal to 0.01%, optionally 0%.

16. An aluminum alloy structural component, wherein the aluminum alloy structural component is a formed body of the aluminum alloy material according to any one of claims 1 to 15.

17. A preparation method of an aluminum alloy structural component, comprising the following steps:

heating and melting an aluminum ingot, adding ingredients determined according to a nominal composition of the aluminum alloy material according to any one of claims 1 to 15 in a form of intermediate alloys, and performing melting and slag removal to prepare a refined aluminum alloy melt;

performing cast molding on the refined aluminum alloy melt to prepare an aluminum alloy ingot; and

performing heat treatment and cooling on the aluminum alloy ingot to obtain the aluminum alloy structural component.

18. A battery box, wherein the battery box satisfies at least one of the following characteristics:

at least a portion of a structural component in the battery box comprises the aluminum alloy material according to any one of claims 1 to 15;

the battery box comprises the aluminum alloy structural component according to claim 16; and

the battery box comprises an aluminum alloy structural component prepared by the preparation method of an aluminum alloy structural component according to claim 17.

19. A battery system, wherein the battery system comprises the battery box according to claim 18 and a battery cell located inside the battery box.

20. The battery system according to claim 19, wherein the battery cell comprises a liquid electrolyte.

21. An electric apparatus, comprising at least one of the aluminum alloy material according to any one of claims 1 to 15, the aluminum alloy structural component according to claim 16, an aluminum alloy structural component prepared by the preparation method of an aluminum alloy structural component according to claim 17, the battery box according to claim 18, and the battery system according to claim 19 or 20.

22. An application of the aluminum alloy material according to any one of claims 1 to 15 in preparation of at least one of an aluminum alloy structural component, a battery box, a battery system, and an electric apparatus.

FIG. 1

FIG. 2

**100 μm**

| Element type | Element content at position P1 (wt%) | Element content at position (wt%) | Element content at position P3 ( wt%) | Element content at position P4 ( wt%) |
|---|---|---|---|---|
| Al | 92.55 | 67.03 | 67.89 | 91.42 |
| Si | 4.71 | 1.37 | 3.7 | 6.25 |
| Mn | 1.38 | 0.1 | 0.27 | 1.16 |
| Fe | 0.55 | - | - | 0.48 |
| Sc | 0.81 | - | - | 0.69 |
| B | - | 31.51 | 28.14 | - |

FIG. 3

FIG. 4

FIG. 5

FIG. 6

FIG. 7

FIG. 8

FIG. 9

FIG. 10

FIG. 11

FIG. 12

## INTERNATIONAL SEARCH REPORT

| | International application No. |
|---|---|
| | **PCT/CN2024/119791** |

| | | |
|---|---|---|
| **A.** | **CLASSIFICATION OF SUBJECT MATTER** | |

C22C21/04(2006.01)i; C22C21/02(2006.01)i; C22C21/00(2006.01)i; C22C1/03(2006.01)i; H01M50/224(2021.01)i; B21C37/00(2006.01)i

According to International Patent Classification (IPC) or to both national classification and IPC

| **B.** | **FIELDS SEARCHED** |
|---|---|

Minimum documentation searched (classification system followed by classification symbols)

IPC: C22C H01M B21C

Documentation searched other than minimum documentation to the extent that such documents are included in the fields searched

Electronic data base consulted during the international search (name of data base and, where practicable, search terms used)

WPABSC; CNTXT; ENTXTC; DWPI; USTXT; JPTXT: 上海交通大学, 宁德时代新能源科技, 杜尚哲, 贾俊, 铝合金, 硅, 钪, 硼, 锰, 钼, 锆, 锶, 共晶, 热处理, 结构件, 电池, 箱体, aluminium, alloys, Sc, scandium, B, boron Mn, manganese, Mo, molybdenum, Zr, zirconium Sr, strontium, eutectic, heat, treatment, structural, parts, batteries, cases

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 116287890 A (SHENZHEN XINSHEN NEW MATERIAL TECHNOLOGY CO., LTD.) 23 June 2023 (2023-06-23) description, paragraphs 3, 6-22, and 39-61 | 1-16, 22 |
| Y | CN 116287890 A (SHENZHEN XINSHEN NEW MATERIAL TECHNOLOGY CO., LTD.) 23 June 2023 (2023-06-23) description, paragraphs 3 and 6-22 | 17-22 |
| Y | CN 116555642 A (SHANGHAI JIAO TONG UNIVERSITY et al.) 08 August 2023 (2023-08-08) description, paragraphs 11-35 | 17-22 |
| A | CN 105088033 A (BYD CO., LTD.) 25 November 2015 (2015-11-25) entire document | 1-22 |
| A | CN 114438377 A (SUZHOU HUIJIN NEW MATERIAL TECHNOLOGY CO., LTD.) 06 May 2022 (2022-05-06) entire document | 1-22 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2024** | **11 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/119791** |

### C. DOCUMENTS CONSIDERED TO BE RELEVANT

| Category* | Citation of document, with indication, where appropriate, of the relevant passages | Relevant to claim No. |
| --- | --- | --- |
| A | CN 116426798 A (JIANGSU UNIVERSITY) 14 July 2023 (2023-07-14)<br>entire document | 1-22 |
| A | US 2017016092 A1 (ALCOA INC.) 19 January 2017 (2017-01-19)<br>entire document | 1-22 |

Form PCT/ISA/210 (second sheet) (July 2022)

**INTERNATIONAL SEARCH REPORT**
Information on patent family members

International application No.

**PCT/CN2024/119791**

| Patent document cited in search report | | | Publication date (day/month/year) | Patent family member(s) | | | Publication date (day/month/year) |
|---|---|---|---|---|---|---|---|
| CN | 116287890 | A | 23 June 2023 | CN | 116287890 | B | 16 January 2024 |
| CN | 116555642 | A | 08 August 2023 | None | | | |
| CN | 105088033 | A | 25 November 2015 | WO | 2015169163 | A1 | 12 November 2015 |
| CN | 114438377 | A | 06 May 2022 | CN | CN114438377 | B | 04 July 2023 |
| CN | 116426798 | A | 14 July 2023 | None | | | |
| US | 2017016092 | A1 | 19 January 2017 | ES | 2694519 | T3 | 21 December 2018 |
| | | | | BR | 112016014362 | A2 | 08 August 2017 |
| | | | | EP | 3084027 | A2 | 26 October 2016 |
| | | | | EP | 3084027 | B1 | 31 October 2018 |
| | | | | MX | 2016008166 | A | 29 September 2016 |
| | | | | US | 10227679 | B2 | 12 March 2019 |
| | | | | CA | 2932867 | A1 | 27 August 2015 |
| | | | | CA | 2932867 | C | 21 June 2022 |
| | | | | JP | 2017508065 | A | 23 March 2017 |
| | | | | EP | 3461922 | A1 | 03 April 2019 |
| | | | | WO | 2015126515 | A2 | 27 August 2015 |
| | | | | PL | 3084027 | T3 | 30 April 2019 |

Form PCT/ISA/210 (patent family annex) (July 2022)

**REFERENCES CITED IN THE DESCRIPTION**

**Patent documents cited in the description**

- CN 2023115989415